# EUROPEAN PATENT APPLICATION

(11) **EP 4 843 658 A1**
(43) Date of publication of application: **25.11.2026**
(21) Application number: 25741793.1
(22) Date of filing: 10.01.2025
(51) Int. Cl.: B01D 53/08, B01D 53/04

(54) **CARBON DIOXIDE SEPARATION SYSTEM**

(30) Priority: 19.01.2024 JP 2024006610
(71) Applicant: KAWASAKI JUKOGYO KABUSHIKI KAISHA, Kobe-shi, Hyogo 650-8670 (JP)
(72) Inventor: MANABE, Satoshi, Hyogo 650-8670 (JP); NARIAI, Toshifumi, Hyogo 650-8670 (JP); OKUMURA, Takeshi, Hyogo 650-8670 (JP); NISHIBE, Shohei, Hyogo 650-8670 (JP); KANO, Atsushi, Hyogo 650-8670 (JP); HASEGAWA, Yusuke, Hyogo 650-8670 (JP); MINE, Yuta, Hyogo 650-8670 (JP); TSUZUKI, Akira, Hyogo 650-8670 (JP); HARA, Yutaro, Hyogo 650-8670 (JP); MATSUO, Noriaki, Hyogo 650-8670 (JP)
(74) Representative: Leinweber & Zimmermann
(86) International application number: PCT/JP2025/000596
(87) International publication number: WO 2025/154661

(57) **Abstract**

A carbon dioxide separation system includes: an adsorber that causes adsorbent to adsorb carbon dioxide in a target gas; a regenerator that causes the adsorbent to release the carbon dioxide by bringing steam into contact with the adsorbent; and a dryer that dries the adsorbent by bringing a drying gas into contact with the adsorbent. At least one of the adsorber or the dryer includes a specific structural body. The specific structural body includes a treatment container in which the adsorbent moves downward by its own weight. The treatment container includes a main portion having an elongated horizontal cross section and extending in a vertical direction. The main portion includes a gas flow region in predetermined opposing regions of both side surfaces of the treatment container, the side surfaces being opposed to each other in a thickness direction of the treatment container, the gas flow region being a region that does not allow the adsorbent to pass therethrough, supplies the gas, supplied to the specific structural body, to an inside of the treatment container, and discharges the gas, having passed through the inside of the treatment container in the thickness direction of the treatment container, from the inside of the treatment container to an outside.

## Description

### Technical Field

The present disclosure relates to a carbon dioxide separation system that separates carbon dioxide from a target gas, such as a flue gas, which contains carbon dioxide.

### Background Art

Conventionally, systems that separate carbon dioxide from a target gas using adsorbent have been known. For example, PTL 1 describes a carbon dioxide separation system including a treatment tower constituted by a tower-shaped treatment container including a top portion to which the adsorbent is supplied and a bottom portion from which the adsorbent is discharged. In this system, an internal space of the tower-shaped treatment container is virtually divided into a regeneration tower, a drying tower, and an adsorption tower from an upper side by obstacles that hinder the downward movement of the adsorbent while maintaining the layered flow of the adsorbent. In the regeneration tower, carbon dioxide is released from the adsorbent, having adsorbed carbon dioxide, by bringing steam into contact with the adsorbent. In the drying tower, the adsorbent having contacted the steam is dried by bringing a drying gas into contact with the adsorbent. In the adsorption tower, the adsorbent adsorbs carbon dioxide in the target gas by bringing the target gas into contact with the adsorbent.

The adsorption tower includes: an ejection port that is located at a lower portion thereof and ejects the target gas upward; and a discharge port that is located at an upper portion thereof and discharges the target gas. Thus, the target gas flows from bottom to top in the tower-shaped treatment container filled with the adsorbent. Moreover, the drying tower includes: an ejection port that is located at a lower portion thereof and ejects the drying gas upward; and a discharge port that is located at an upper portion thereof and discharges the drying gas. Thus, the drying gas flows from bottom to top in the tower-shaped treatment container filled with the adsorbent.

### Citation List

### Patent Literature

PTL 1: Japanese Patent No. 6298360

### Summary of Invention

### Technical Problem

According to the configuration of PTL 1, in the adsorption tower, the flow distance of the target gas flowing from bottom to top in the tower-shaped treatment container filled with the adsorbent is long. Therefore, there is a problem that the pressure loss of the target gas increases, and the energy cost for supplying the target gas also increases.

Moreover, in the drying tower, the flow distance of the drying gas flowing from bottom to top in the tower-shaped treatment container filled with the adsorbent is long. Therefore, there is a problem that the pressure loss of the drying gas increases, and the energy cost for supplying the drying gas also increases.

The present disclosure was made to solve the above problems, and an object of the present disclosure is to provide a carbon dioxide separation system capable of reducing the pressure loss of at least one of a target gas or a drying gas.

### Solution to Problem

To achieve the above object, a carbon dioxide separation system according to an aspect of the present disclosure includes: an adsorber that is supplied with a target gas containing carbon dioxide and causes particulate adsorbent to adsorb the carbon dioxide in the target gas by bringing the target gas into contact with the adsorbent; a regenerator that causes the adsorbent, which has adsorbed the carbon dioxide, to release the carbon dioxide by bringing steam into contact with the adsorbent; and a dryer that is supplied with a drying gas and dries the adsorbent, which has contacted the steam, by bringing the drying gas into contact with the adsorbent. At least one of the adsorber or the dryer includes a specific structural body. The specific structural body includes a treatment container in which the adsorbent moves downward by its own weight. The treatment container includes a main portion having an elongated horizontal cross section and extending in a vertical direction. The main portion includes a gas flow region in predetermined opposing regions of both side surfaces of the treatment container, the side surfaces being opposed to each other in a thickness direction of the treatment container, the gas flow region being a region that does not allow the adsorbent to pass therethrough, supplies the gas, supplied to the specific structural body, to an inside of the treatment container, and discharges the gas, having passed through the inside of the treatment container in the thickness direction of the treatment container, from the inside of the treatment container to an outside.

### Advantageous Effects of Invention

The present disclosure has an effect of being able to provide the carbon dioxide separation system having the above-described configuration and capable of reducing the pressure loss of at least one of the target gas or the drying gas.

### Brief Description of Drawings

FIG. 1 is a block diagram showing one example of a schematic configuration of a carbon dioxide separation system according to Embodiment 1.
FIG. 2 is a perspective view showing a first configuration example of a specific structural body applied to an adsorber and a dryer.
FIG. 3 is a side view of a treatment container of the specific structural body shown in FIG. 2.
FIG. 4 is a perspective view showing a second configuration example of the specific structural body applied to the adsorber and the dryer.
FIG. 5 is a side view of the treatment container of the specific structural body shown in FIG. 4.
FIG. 6 is a perspective view schematically showing the appearance of one example of the carbon dioxide separation system according to Embodiment 2.
FIG. 7 is a front view of the dryer and the adsorber shown in FIG. 6.
FIG. 8 is a side view showing one example of a vertically-elongated treatment container used in the dryer and the adsorber shown in FIG. 6.
FIG. 9 is a side view showing another example of the vertically-elongated treatment container.
FIG. 10 is a front view showing a third configuration example of the specific structural body according to Embodiment 1.
FIG. 11 is a front view showing a fourth configuration example of the specific structural body according to Embodiment 1.
FIG. 12 is a perspective view schematically showing the appearance of one example of the carbon dioxide separation system according to Embodiment 3.
FIG. 13 is a perspective view schematically showing the appearance of one example of the carbon dioxide separation system according to Embodiment 4.
FIG. 14 is a perspective view schematically showing the appearance of one example of the carbon dioxide separation system according to Embodiment 5.
FIG. 15 is a side view showing another example of the treatment container of the specific structural body shown in FIG. 4, etc.
FIG. 16 is a side view showing another example of the vertically-elongated treatment container used in the dryer and the adsorber shown in FIG. 6, etc.

### Description of Embodiments

Hereinafter, preferred embodiments of the present disclosure will be described with reference to the drawings. In the following description, the same reference sigs are used for the same or corresponding components throughout the drawings, and redundant description thereof may be omitted. Moreover, the drawings schematically show respective components for ease of understanding, and the shapes, dimensional ratios, and the like may not be shown accurately.

### Embodiment 1

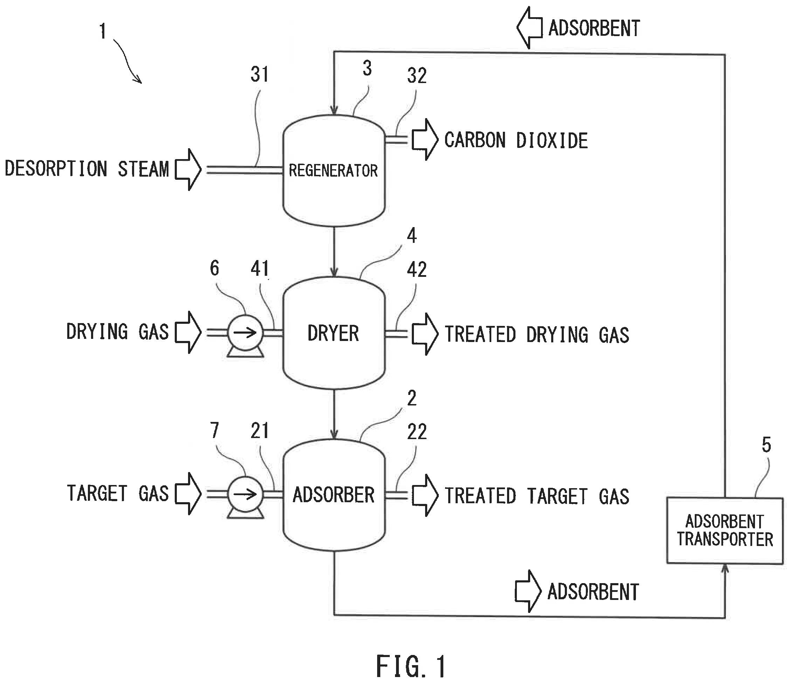

FIG. 1 is a block diagram showing one example of a schematic configuration of a carbon dioxide separation system according to Embodiment 1. A carbon dioxide separation system 1 shown in FIG. 1 includes a series of systems that selectively separate carbon dioxide from a target gas containing carbon dioxide using adsorbent, and regenerates the adsorbent utilized for the separation. The target gas is, for example, a flue gas from a thermal power plant or the like. As the adsorbent, for example, particulate solid absorbent having an amine supported on a porous body can be used. As the porous body, silica gel, activated alumina, metal oxide, or the like can be used.

The carbon dioxide separation system 1 includes an adsorber 2, a regenerator 3, a dryer 4, an adsorbent transporter 5, fans 6 and 7, and the like. The adsorbent circulates through the adsorber 2, the regenerator 3, and the dryer 4 via the adsorbent transporter 5. During the operation of the carbon dioxide separation system 1, the adsorbent is present in the adsorber 2, the regenerator 3, and the dryer 4 at all times. As the adsorbent transporter 5, for example, a conveyor, such as a bucket conveyor, may be used, or a pneumatic transportation device or the like may be used.

The adsorber 2 is a device that is supplied with the target gas, such as the flue gas, and causes the adsorbent to adsorb carbon dioxide in the target gas by bringing the target gas into contact with the adsorbent. The target gas is supplied to the adsorber 2 through a target gas supply passage 21 by the fan 7. A treated target gas that is the target gas from which carbon dioxide has been removed by the adsorbent in the adsorber 2 is discharged through a target gas discharge passage 22.

The regenerator 3 is supplied with desorption steam through a steam supply passage 31. The desorption steam is steam for desorbing carbon dioxide from the adsorbent. The regenerator 3 is a device that causes the adsorbent, which has adsorbed carbon dioxide and has been transported from the adsorber 2 by the adsorbent transporter 5, to release carbon dioxide by bringing the desorption steam into contact with the adsorbent.

In the regenerator 3, steam in the desorption steam condenses on the adsorbent by the contact between the adsorbent and the desorption steam, and thus, carbon dioxide is released from the adsorbent. The amount of steam in the desorption steam is such that substantially all of the steam in the desorption steam condenses on the adsorbent. The carbon dioxide desorbed and released from the adsorbent is discharged through a carbon dioxide recovery passage 32. For example, the carbon dioxide sucked by a vacuum pump and discharged through the carbon dioxide recovery passage 32 is stored in a carbon dioxide holder. The adsorbent to which condensed water has adhered in the regenerator 3 is supplied to the dryer 4.

The dryer 4 is a device that is supplied with a drying gas and dries the adsorbent, which has contacted the desorption steam, by bringing the drying gas into contact with the adsorbent. The drying gas is supplied to the dryer 4 through a drying gas supply passage 41 by the fan 6. A treated drying gas that is the used drying gas having passed through the dryer 4 is discharged to the outside through a drying gas discharge passage 42. The drying gas to be supplied to the dryer 4 is outside air. Regarding the outside air, for example, it is preferable that: the humidity of the outside air be adjusted by removing the moisture from the outside air by a condenser; and the temperature of the outside air be adjusted by being increased by a heater. The adsorbent dried by the dryer 4 is supplied to the adsorber 2.

Next, details of the present embodiment will be described. The regenerator 3 may employ a known configuration, such as a tower-type device including a columnar treatment container.

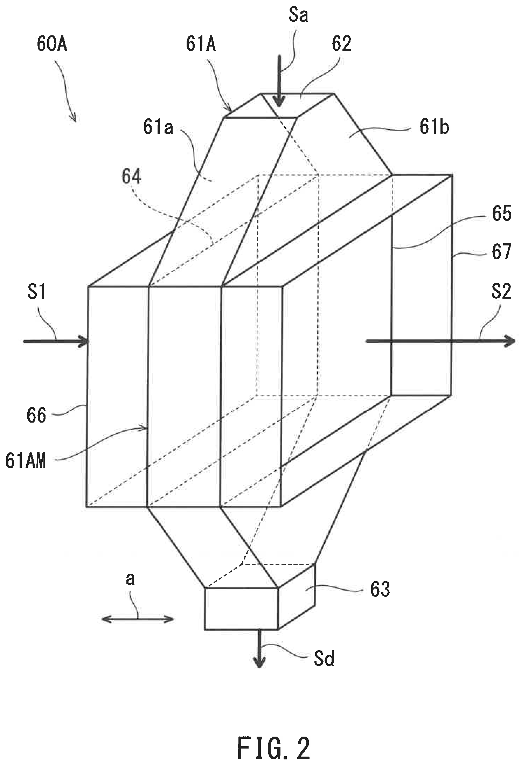

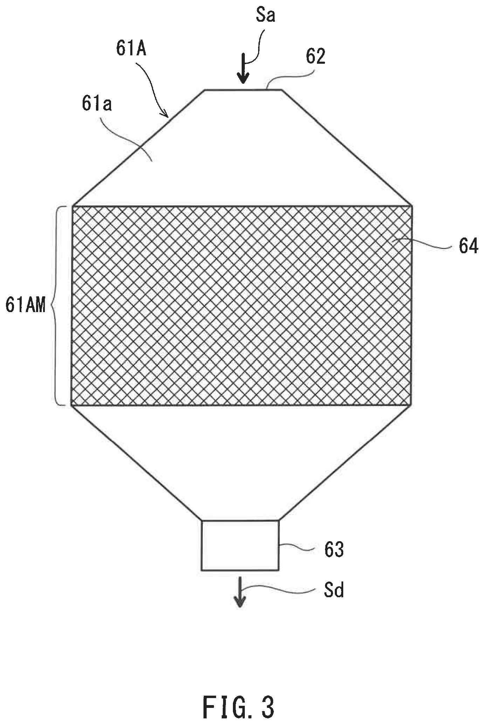

FIG. 2 is a perspective view showing a first configuration example of a specific structural body applied to the adsorber 2 and the dryer 4. FIG. 3 is a side view of a treatment container 61A of a specific structural body 60A shown in FIG. 2.

The specific structural body 60A according to the first configuration example includes the treatment container 61A including a main portion 61AM that has an elongated horizontal cross section and extends in a vertical direction. The treatment container 61A includes, at its upper end, a receiving port 62 that receives the adsorbent supplied from above, as shown by an arrow Sa. The treatment container 61A includes, at its lower end, a discharger 63 that discharges the adsorbent downward, as shown by an arrow Sd. The discharger 63 is constituted by, for example, a rotary valve.

The discharger 63 is intermittently or continuously driven. As the adsorbent is discharged by the discharger 63 from the lower end of the treatment container 61A, the adsorbent in the treatment container 61A moves downward by its own weight.

In the treatment container 61A, predetermined opposing regions of side surfaces 61a and 61b, which are opposed to each other in a thickness direction a of the treatment container 61A, of the main portion 61AM serve as gas flow regions 64 and 65 that do not allow the adsorbent to pass therethrough but allow gas to pass therethrough. The gas flow regions 64 and 65 are formed by, for example, mesh parts, such as wire mesh. FIG. 3 shows the side surface 61a, and the side surface 61b is configured similarly. The thickness direction a of the treatment container 61A is a direction indicated by an arrow a. The thickness direction a of the treatment container 61A is the same as a thickness direction of the main portion 61AM and is a horizontal direction orthogonal to a longitudinal direction of the elongated horizontal cross section of the main portion 61AM.

The treatment container 61A includes: a gas supply port 66 surrounding the gas flow region 64; and a gas discharge port 67 surrounding the gas flow region 64.

Moreover, in the treatment container 61A, the adsorbent circulates so as to be always present up to a position above upper ends of the gas flow regions 64 and 65. As shown by arrows S1 and S2, the gas to be supplied to the specific structural body 60A is supplied from the gas supply port 66 of the treatment container 61A through the gas flow region 64 to the inside of the treatment container 61A, passes through the inside of the treatment container 61A while contacting the adsorbent, and is discharged from the gas discharge port 67 through the gas flow region 65. To be specific, the gas flow regions 64 and 65 opposed to each other in the horizontal direction supply the gas, supplied to the specific structural body 60A, to the inside of the treatment container 61A, and discharge the gas, having passed through the inside of the treatment container 61A in the thickness direction a of the treatment container 61, from the inside of the treatment container 61A to the outside.

When the specific structural body 60A is applied to the adsorber 2, the gas to be supplied to the specific structural body 60A is the target gas. In addition, the target gas supply passage 21 is connected to the gas supply port 66, and the target gas discharge passage 22 is connected to the gas discharge port 67.

Moreover, when the specific structural body 60A is applied to the dryer 4, the gas to be supplied to the specific structural body 60A is the drying gas. In addition, the drying gas supply passage 41 is connected to the gas supply port 66, and the drying gas discharge passage 42 is connected to the gas discharge port 67.

In the specific structural body 60A according to the first configuration example, the gas supplied to the specific structural body 60A passes through the inside of the treatment container 61A in the thickness direction a via the opposing gas flow regions 64 and 65 of the side surfaces 61a and 61b of the main portion 61AM of the treatment container 61A. Thus, a travel distance of the gas, supplied to the specific structural body 60A, in the treatment container 61A can be reduced, and the pressure loss of the gas passing through the treatment container 61A in which the adsorbent is present can be reduced. Moreover, the flow rate of the gas can be increased by increasing the areas of the gas flow regions 64 and 65 of the side surfaces 61a and 61b of the treatment container 61A. Thus, when the adsorber 2 includes the specific structural body 60A, the pressure loss of the target gas supplied to the adsorber 2 can be reduced. Moreover, when the dryer 4 includes the specific structural body 60A, the pressure loss of the drying gas supplied to the dryer 4 can be reduced. Since the pressure loss of the target gas and the pressure loss of the drying gas are reduced as above, the energy cost required to supply the target gas and the drying gas can be reduced. For example, the electric power consumption of the fan 7 and the like used to supply the target gas to the adsorber 2 can be reduced. Moreover, the electric power consumption of the fan 6 and the like used to supply the drying gas to the dryer 4 can be reduced.

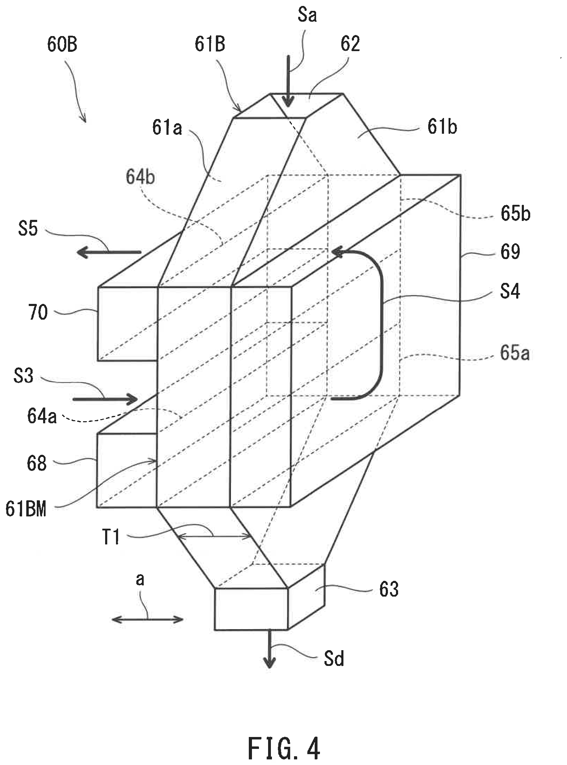

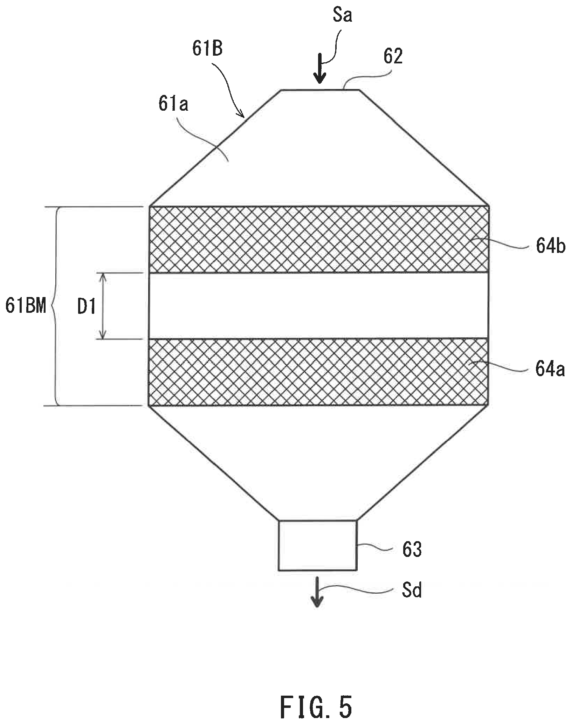

FIG. 4 is a perspective view showing a second configuration example of the specific structural body applied to the adsorber 2 and the dryer 4. FIG. 5 is a side view of a treatment container 61B of a specific structural body 60B shown in FIG. 4.

The specific structural body 60B according to the second configuration example includes the treatment container 61B including a main portion 61BM that has an elongated horizontal cross section and extends in the vertical direction. The treatment container 61B differs from the treatment container 61A in terms of the gas flow regions. The treatment container 61B includes: gas flow regions 64a and 64b located on the side surface 61a of the main portion 61BM and away from each other in the vertical direction; and gas flow regions 65a and 65b located on the side surface 61b of the main portion 61BM and away from each other in the vertical direction. The gas flow regions 64a and 64b of the side surface 61a and the gas flow regions 65a and 65b of the side surface 61b are opposed to each other.

The treatment container 61B includes: a gas supply port 68 surrounding the gas flow region 64a of the side surface 61a; and a gas discharge port 70 surrounding the gas flow region 64b of the side surface 61a. Moreover, the treatment container 61B includes a gas turn lid 69 that surrounds and covers the two gas flow regions 65a and 65b of the side surface 61b and a region between the regions 65a and 65b together.

Moreover, in the treatment container 61B, the adsorbent circulates so as to be always present up to a position above upper ends of the gas flow regions 64b and 65b located at uppermost portions. As shown by an arrow S3, the gas to be supplied to the specific structural body 60B is supplied from the gas supply port 68 of the treatment container 61B through the gas flow region 64a to the inside of the treatment container 61B, passes through the inside of the treatment container 61B while contacting the adsorbent, and is supplied to the inside of the gas turn lid 69 through the gas flow region 65a. Then, as shown by arrows S4 and S5, the gas changes its direction in the gas turn lid 69, is supplied to the inside of the treatment container 61B again through the gas flow region 65b, passes through the inside of the treatment container 61B while contacting the adsorbent, and is discharged from the gas discharge port 70. To be specific, the gas supplied to the specific structural body 60B passes through the inside of the treatment container 61B twice in the thickness direction a of the treatment container 61B. The thickness direction a of the treatment container 61B is a direction indicated by the arrow a. The thickness direction a of the treatment container 61B is the same as a thickness direction of the main portion 61BM and is a horizontal direction orthogonal to a longitudinal direction of the elongated horizontal cross section of the main portion 61BM.

As shown in FIG. 5, it is preferable that a predetermined interval D1 be set between the group of the gas flow regions 64a and 65a and the group of the gas flow regions 64b and 65b such that the gas that has not yet changed its direction and the gas that has already changed its direction do not interfere with each other in the treatment container 61B. For example, it is preferable that the interval D1 be set to an interval larger than twice a thickness T1 of the inside of the treatment container 61B which is a region in which the adsorbent is present as shown in FIG. 4.

In the present example, the gas supplied to the specific structural body 60B changes its direction once, and passes through the inside of the treatment container 61B twice.
However, the gas supplied to the specific structural body 60B may change its direction twice or more, and pass through the inside of the treatment container 61B three times or more.

When the specific structural body 60B is applied to the adsorber 2, the gas supplied to the specific structural body 60B is the target gas. In addition, the target gas supply passage 21 is connected to the gas supply port 68, and the target gas discharge passage 22 is connected to the gas discharge port 70.

Moreover, when the specific structural body 60B is applied to the dryer 4, the gas supplied to the specific structural body 60B is the drying gas. In addition, the drying gas supply passage 41 is connected to the gas supply port 68, and the drying gas discharge passage 42 is connected to the gas discharge port 70.

Also in the specific structural body 60B according to the second configuration example, the main portion 61BM of the treatment container 61B includes the gas flow regions 64a, 64b, 65a, and 65b which are located in predetermined regions opposed to each other in the thickness direction a of the treatment container 61B, do not allow the adsorbent to pass therethrough, can supply the gas, supplied to the specific structural body 60B, to the inside of the treatment container 61B, and can discharge the gas, having passed through the inside of the treatment container 61B in the thickness direction a of the treatment container 61B, from the inside of the treatment container 61B to the outside. Therefore, the specific structural body 60B according to the second configuration example can obtain effects similar to those of the specific structural body 60A according to the first configuration example.

Moreover, according to the second configuration example, the gas supplied to the specific structural body 60B changes its direction and passes through the inside of the treatment container 61B multiple times. Therefore, the performance of the specific structural body 60B which is obtained by bringing the gas into contact with the adsorbent can be improved. To be specific, when the specific structural body 60B is applied to the adsorber 2, the adsorbent can adsorb a larger amount of carbon dioxide contained in the target gas, i.e., the carbon dioxide adsorption performance of the adsorber 2 can be improved. Moreover, when the specific structural body 60B is applied to the dryer 4, the adsorbent can be further dried, i.e., the adsorbent drying performance of the dryer 4 can be improved.

Moreover, in the second configuration example, when the gas changes its direction, the gas turns upward as shown by the arrow S4. However, the gas may turn downward. To be specific, the gas discharge port 70 may serve as a gas supply port, and the gas supply port 68 may serve as a gas discharge port. Herein, in a case where the specific structural body 60B is applied to the adsorber 2, and the gas turns downward when changing its direction, the adsorbent moves from top to bottom, and therefore, the adsorbent that has adsorbed a large amount of carbon dioxide from the target gas that has not yet changed its direction and has a high carbon dioxide concentration moves downward, and this adsorbent then adsorbs carbon dioxide from the target gas that has already changed its direction and has a low carbon dioxide concentration. In this case, the carbon dioxide adsorption performance of the adsorbent that has adsorbed a large amount of carbon dioxide is low when the adsorbent adsorbs carbon dioxide from the target gas that has already changed its direction and has a low carbon dioxide concentration.

On the other hand, as described in the above example, in a case where the gas turns upward when changing its direction, the adsorbent that has adsorbed a small amount of carbon dioxide from the target gas that has already changed its direction and has a low carbon dioxide concentration moves downward, and this adsorbent adsorbs carbon dioxide from the target gas that has not yet changed its direction and has a high carbon dioxide concentration. When the adsorbent that has adsorbed a small amount of carbon dioxide adsorbs carbon dioxide from the target gas that has not yet changed its direction and has a high carbon dioxide concentration, the deterioration of the carbon dioxide adsorption performance is suppressed. Therefore, in a case where the gas turns upward when changing its direction, the carbon dioxide adsorption performance of the adsorber 2 can be improved compared to a case where the gas turns downward.

Moreover, in a case where the specific structural body 60B is applied to the dryer 4, and the gas turns downward when changing its direction, the adsorbent moves from top to bottom, and therefore, the adsorbent that has been dried to some extent by the drying gas that has not yet changed its direction and has a high degree of dryness moves downward, and this adsorbent is dried by the drying gas that has already changed its direction and has a low degree of dryness. In this case, the drying performance of the drying gas having a low degree of dryness is low when the dying gas dries the adsorbent that has been dried to some extent.

On the other hand, as described in the above example, in a case where the gas turns upward when changing its direction, the adsorbent that has been dried to some extent by the drying gas that has already changed its direction and has a low degree of dryness moves downward, and this adsorbent that has been dried to some extent is dried by the drying gas that has not yet changed its direction and has a high degree of dryness. Therefore, in a case where the gas turns upward when changing its direction, the adsorbent drying performance of the dryer 4 can be improved compared to a case where the gas turns downward.

As described above, it is preferable that the gas turn upward when changing its direction. In addition, it is more preferable that when the gas changes its direction multiple times, the gas sequentially turn upward. To be specific, it is preferable that when n is an integer of 1 or more, the gas flow region through which the gas supplied to the specific structural body 60B passes when passing through the treatment container 61B for the (n+1)-th time be located above the gas flow region through which the gas passes when passing through the treatment container 61B for the n-th time.

In Embodiment 1 including the first and second configuration examples, the regenerator 3, the dryer 4, and the adsorber 2 are located in this order from top, and the adsorbent discharged from the adsorber 2 is supplied to the regenerator 3 by the adsorbent transporter 5. However, Embodiment 1 is not limited to this. It is sufficient that the adsorbent circulate through the adsorber 2, the regenerator 3, and the dryer 4 in this order. The adsorbent discharged from the regenerator 3 is not easy to handle because condensed water adheres thereto. Therefore, it is preferable that the adsorbent be supplied from the regenerator 3 directly to the dryer 4 without through the adsorbent transporter 5.

In Embodiment 1, the specific structural body 60A or 60B is applied to both the adsorber 2 and the dryer 4. However, the specific structural body 60A or 60B may be applied to only one of the adsorber 2 and the dryer 4. Moreover, one of the specific structural bodies 60A and 60B may be applied to the adsorber 2, and the other may be applied to the dryer 4. To the adsorber 2 or the dryer 4 to which the specific structural body 60A or 60B is not applied, a known configuration, such as a tower-shaped device, may be applied.

### Embodiment 2

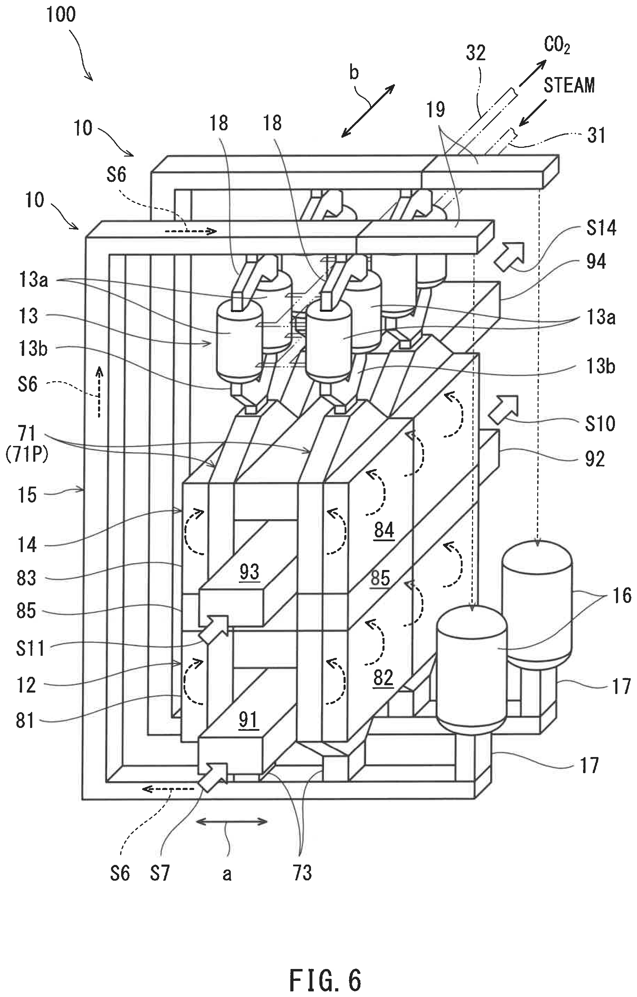

FIG. 6 is a perspective view schematically showing the appearance of the carbon dioxide separation system as one example in Embodiment 2.

A carbon dioxide separation system 100 shown in FIG. 6 is a system including individual systems 10 lined up in a direction indicated by an arrow b and coupled to each other. The individual systems 10 are the same in configuration as each other. Moreover, FIG. 6 shows an example in which two individual systems 10 are coupled to each other. However, three or more individual systems 10 may be lined up in the direction indicated by the arrow b and coupled to each other. The direction indicated by the arrow b which is a direction in which the individual systems 10 are lined up is a horizontal direction orthogonal to the thickness direction a of a below-described vertically-elongated treatment container 71.

The individual system 10 is one of modified examples of the carbon dioxide separation system 1 shown in FIG. 1 and includes an adsorber 12, a regenerator 13, a dryer 14, an adsorbent transporter 15, and the like. In the individual system 10, the regenerator 13, the dryer 14, and the adsorber 12 are located in this order from top. The adsorbent is transported inside the adsorbent transporter 15 in directions indicated by arrows S6 and circulates through the adsorber 12, the regenerator 13, and the dryer 14 via the adsorbent transporter 15. As with the adsorbent transporter 5 shown in FIG. 1, as the adsorbent transporter 15, for example, a conveyor, such as a bucket conveyor, may be used, or a pneumatic transportation device or the like may be used.

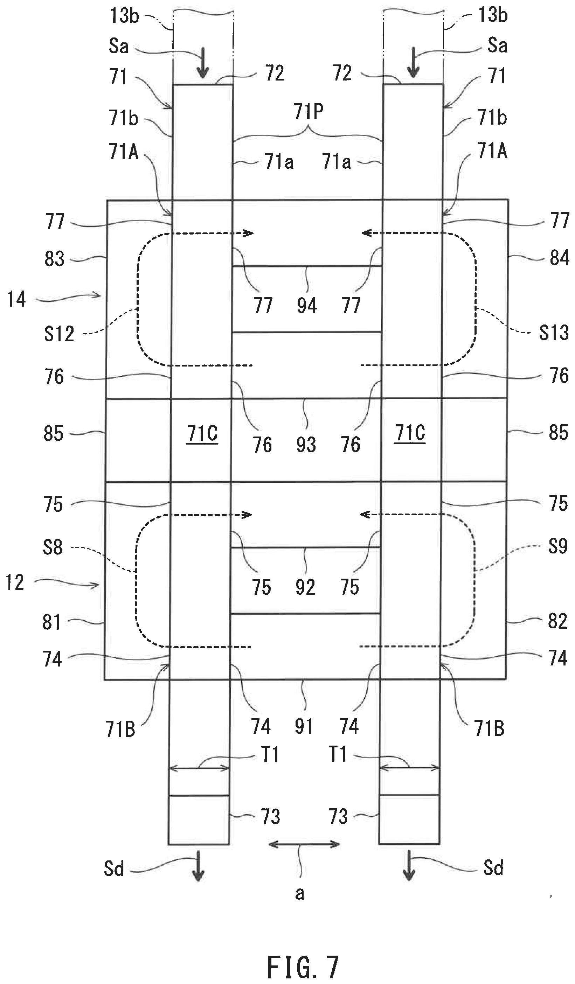

Here, the regenerator 13 includes two columnar regeneration treatment containers 13a for one vertically-elongated treatment container 71. The adsorbent transporter 15 includes feeders 18 that are located for the two vertically-elongated treatment containers 71 and distribute the adsorbent to the regeneration treatment containers 13a. Moreover, a discharger 13b is located at lower portions of the two regeneration treatment containers 13a. The discharger 13b sequentially discharges the adsorbent of the two regeneration treatment containers 13a to a receiving port 72 of the vertically-elongated treatment container 71 shown in FIG. 7 described below. In the present example, the two regeneration treatment containers 13a are installed for one vertically-elongated treatment container 71. However, one regeneration treatment container 13a or three or more regeneration treatment containers 13a may be installed for one vertically-elongated treatment container 71.

The steam supply passage 31 to which the desorption steam is supplied is connected to each regeneration treatment container 13a. In the regeneration treatment container 13a, the desorption steam is brought into contact with the adsorbent that has adsorbed carbon dioxide and has been transported from the adsorber 12 by the adsorbent transporter 15. Thus, carbon dioxide is released from the adsorbent. The carbon dioxide released from the adsorbent is sucked by a vacuum pump and stored in a carbon dioxide holder through the carbon dioxide recovery passage 32 connected to the regeneration treatment container 13a.

The adsorbent may be finely crushed during use. Therefore, in the present embodiment, a classifier 19 is coupled to the adsorbent transporter 15, and the adsorbent is supplied to the classifier 19 at a predetermined timing. Here, the feeder 18 can switch between a state in which the feeder 18 receives the adsorbent transported by the adsorbent transporter 15 and supplies the adsorbent to the regeneration treatment containers 13a and a state in which the feeder 18 allows the adsorbent to flow to the downstream side without receiving the adsorbent. By switching the feeder 18 such that the adsorbent flows to the downstream side, the adsorbent is supplied to the classifier 19. The classifier 19 removes the adsorbent having a size smaller than a predetermined size, and discharges the adsorbent having the predetermined size or more to an adsorbent buffer tank 16. The adsorbent buffer tank 16 includes, at its lower end, a discharger 17, such as a rotary valve. By performing the discharging operation of the discharger 17 at a suitable timing, the adsorbent stored in the adsorbent buffer tank 16 can be supplied to the adsorbent transporter 15, and thus, the adsorbent can be replenished or the like.

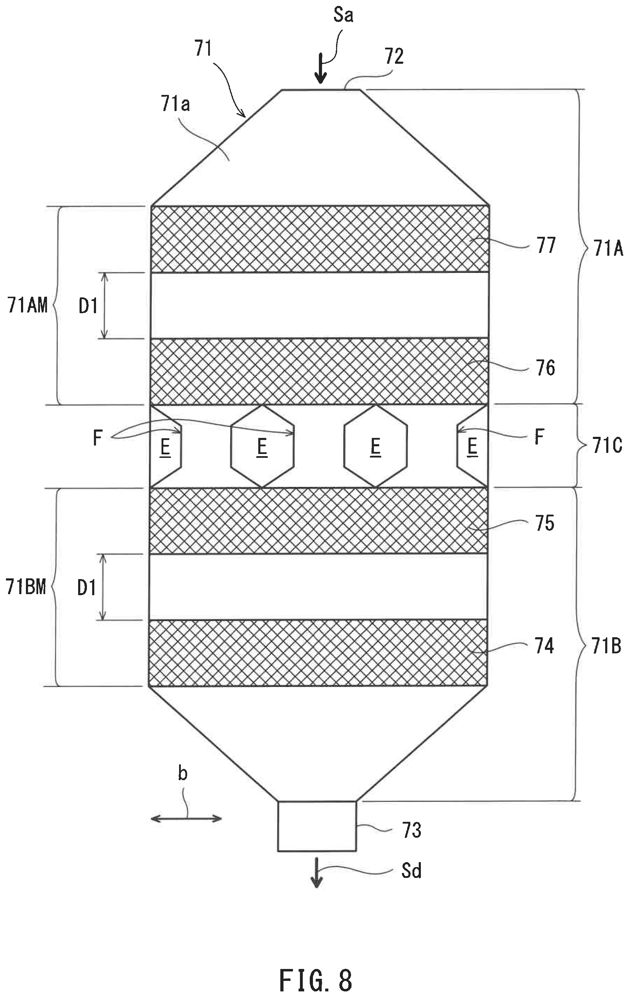

FIG. 7 is a front view of the dryer 14 and the adsorber 12 shown in FIG. 6. FIG. 8 is a side view showing one example of the vertically-elongated treatment container 71 used in the dryer 14 and the adsorber 12 shown in FIG. 6.

The individual system 10 includes a vertically-elongated treatment container pair 71P including two vertically-elongated treatment containers 71 that are located as the dryer 14 and the adsorber 12 so as to be spaced apart from each other in the thickness direction a of the vertically-elongated treatment container 71. Here, the treatment containers of the specific structural bodies 60B shown in FIG. 4 are applied to the dryer 14 and the adsorber 12, and the treatment containers of the two specific structural bodies 60B are integrated with each other to constitute the vertically-elongated treatment container 71. Specifically, the vertically-elongated treatment container 71 is configured such that a treatment container 71A of the dryer 14 and a treatment container 71B of the adsorber 12 are integrated with each other through a coupling portion 71C. The treatment container 71A includes a main portion 71AM that has an elongated horizontal cross section and extends in the vertical direction, and the treatment container 71B includes a main portion 71BM that has an elongated horizontal cross section and extends in the vertical direction. The thickness direction a of the vertically-elongated treatment container 71 is a direction indicated by the arrow a, is a thickness direction of the treatment containers 71A and 71B, is the same as a thickness direction of the main portions 71AM and 71BM of the treatment containers 71A and 71B, and is a horizontal direction orthogonal to a longitudinal direction of the elongated horizontal cross sections of the main portions 71AM and 71BM.

The vertically-elongated treatment container 71 includes, at its upper end, the receiving port 72 that receives the adsorbent supplied from above as shown by the arrow Sa. The vertically-elongated treatment container 71 includes, at its lower end, a discharger 73 that discharges the adsorbent downward as shown by the arrow Sd. The discharger 73 is constituted by, for example, a rotary valve. In this case, a discharger that discharges the adsorbent from the dryer 14 to the adsorber 12 can be omitted.

Each of the two vertically-elongated treatment containers 71 includes gas flow regions 74 and 75 that are located away from each other in the vertical direction on each of side surfaces 71a and 71b, corresponding to the treatment container 71B of the adsorber 12, of the vertically-elongated treatment container 71. The gas flow region 74 of the side surface 71a and the gas flow region 74 of the side surface 71b are located so as to be opposed to each other, and the gas flow region 75 of the side surface 71a and the gas flow region 75 of the side surface 71b are located so as to be opposed to each other. The gas flow regions 74 and 75 are the same in configuration as the gas flow regions 64a, 65a, 64b, and 65b shown in FIG. 4.

Moreover, gas turn lids 81 and 82 are located on respective portions of the two vertically-elongated treatment containers 71 which correspond to the treatment containers 71B of the adsorber 12. Each of the gas turn lids 81 and 82 surrounds and covers the two gas flow regions 74 and 75 of the side surface 71b and a region between these two regions 74 and 75 together. Then, a target gas common supply passage 91 through which the target gas is supplied to the gas flow regions 74 and a target gas common discharge passage 92 through which the target gas having passed through the gas flow regions 75 is discharged are located between the two vertically-elongated treatment containers 71.

The target gas common supply passage 91 is a supply passage for the target gas common to the individual systems 10 lined up in the direction indicated by the arrow b. Similarly, the target gas common discharge passage 92 is a discharge passage for the target gas common to the individual systems 10 lined up in the direction indicated by the arrow b.

As shown by an arrow S7 in FIG. 6, the target gas, such as the flue gas, is supplied to the target gas common supply passage 91. Then, the target gas flows from the target gas common supply passage 91 through the gas flow regions 74 of the vertically-elongated treatment containers 71 on both sides to the insides of the vertically-elongated treatment containers 71 and passes through the insides of the vertically-elongated treatment containers 71 while contacting the adsorbent. Then, as shown by arrows S8 and S9 in FIG. 7, the target gas changes its direction in the gas turn lids 81 and 82. The target gas that has changed its direction flows through the gas flow regions 75 to the insides of the vertically-elongated treatment containers 71 again and passes through the insides of the vertically-elongated treatment containers 71 while contacting the adsorbent. Then, the target gas is discharged to the target gas common discharge passage 92. Thereafter, as shown by an arrow S10 in FIG. 6, the target gas is discharged through the target gas common discharge passage 92 to the outside.

On the other hand, each of the two vertically-elongated treatment containers 71 includes gas flow regions 76 and 77 that are located away from each other in the vertical direction on each of the side surfaces 71a and 71b, corresponding to the treatment container 71A of the dryer 14, of the vertically-elongated treatment container 71. The gas flow region 76 of the side surface 71a and the gas flow region 76 of the side surface 71b are located so as to be opposed to each other, and the gas flow region 77 of the side surface 71a and the gas flow region 77 of the side surface 71b are located so as to be opposed to each other. The gas flow regions 76 and 77 are the same in configuration as the gas flow regions 64a, 65a, 64b, and 65b shown in FIG. 4.

Moreover, gas turn lids 83 and 84 are located on portions of the two vertically-elongated treatment containers 71 which correspond to the treatment containers 71A of the dryer 14. Each of the gas turn lids 83 and 84 surrounds and covers the gas flow regions 76 and 77 of the side surface 71b and a region between these two regions 76 and 77 together. Then, a drying gas common supply passage 93 through which the drying gas is supplied to the gas flow regions 76 and a drying gas common discharge passage 94 through which the drying gas having passed through the gas flow regions 77 is discharged are located between the two vertically-elongated treatment containers 71.

The drying gas common supply passage 93 is a supply passage for the drying gas common to the individual systems 10 lined up in the direction indicated by the arrow b. Similarly, the drying gas common discharge passage 94 is a discharge passage for the drying gas common to the individual systems 10 lined up in the direction indicated by the arrow b.

As shown by an arrow S11 in FIG. 6, the drying gas is supplied to the drying gas common supply passage 93. Then, the drying gas flows from the drying gas common supply passage 93 through the gas flow regions 76 of the vertically-elongated treatment containers 71 on both sides to the insides of the vertically-elongated treatment containers 71 and passes through the insides of the vertically-elongated treatment containers 71 while contacting the adsorbent. Then, as shown by arrows S12 and S13 in FIG. 7, the drying gas changes its direction in the gas turn lids 83 and 84. The drying gas that has changed its direction flows through the gas flow regions 77 to the insides of the vertically-elongated treatment containers 71 again and passes through the insides of the vertically-elongated treatment containers 71 while contacting the adsorbent. Then, the drying gas is discharged to the drying gas common discharge passage 94. Thereafter, as shown by an arrow S14 in FIG. 6, the drying gas is discharged through the drying gas common discharge passage 94 to the outside. In the present example, a cover 85 covering a gap between the two gas turn lids 81 and 83 and a cover 85 covering a gap between the two gas turn lids 82 and 84 are included. However, these covers 85 may be omitted.

The adsorbent is supplied from the regenerator 13 to the vertically-elongated treatment container 71 so as to be always present up to a position above upper ends of the gas flow regions 77 located at uppermost portions.

As shown in FIG. 8, it is preferable that the predetermined interval D1 be set between the gas flow regions 74 and 75 and between the gas flow regions 76 and 77 such that regarding each of the target gas and the drying gas, the gas that has not yet changed its direction and the gas that has already changed its direction do not interfere with each other in the vertically-elongated treatment container 71. For example, it is preferable that the interval D1 be set to an interval larger than twice the thickness T1 of the inside of the vertically-elongated treatment container 71 which is a region in which the adsorbent is present as shown in FIG. 7. The two intervals D1 shown in FIG. 8 do not have to be equal to each other.

Moreover, in the present example, non-passage regions E that do not allow the adsorbent or the gas to pass therethrough are located in the coupling portion 71C between the treatment container 71A of the dryer 14 and the treatment container 71B of the adsorber 12. Therefore, an adsorbent passage is divided into passages F. Thus, the total of horizontal cross-sectional areas of the passages F is smaller than a horizontal cross-sectional area of the gas flow region 75 of the treatment container 71B, and the total of the horizontal cross-sectional areas of the passages F is smaller than a horizontal cross-sectional area of the gas flow region 76 of the treatment container 71A. Thus, the pressure loss of the gas is large when the gas passes through the coupling portion 71C in the vertical direction. Therefore, the target gas passing through the gas flow region 75 can be prevented from flowing into the treatment container 71A of the dryer 14, and the drying gas passing through the gas flow region 76 can be prevented from flowing into the treatment container 71B of the adsorber 12. Thus, the drying treatment in the treatment container 71A and the adsorption treatment in the treatment container 71B can be satisfactorily performed. Moreover, the target gas and the drying gas can be prevented from interfering with each other by the non-passage regions E. The target gas and the target gas flowing in opposite directions in the vertically-elongated treatment container 71 may be prevented from interfering with each other in such a manner that the non-passage regions E are located in a portion of the vertically-elongated treatment container 71 which is located between the gas flow regions 74 and 75. Moreover, the drying gas and the drying gas flowing in opposite directions in the vertically-elongated treatment container 71 may be prevented from interfering with each other in such a manner that the non-passage regions E are located in a portion of the vertically-elongated treatment container 71 which is located between the gas flow regions 76 and 77.

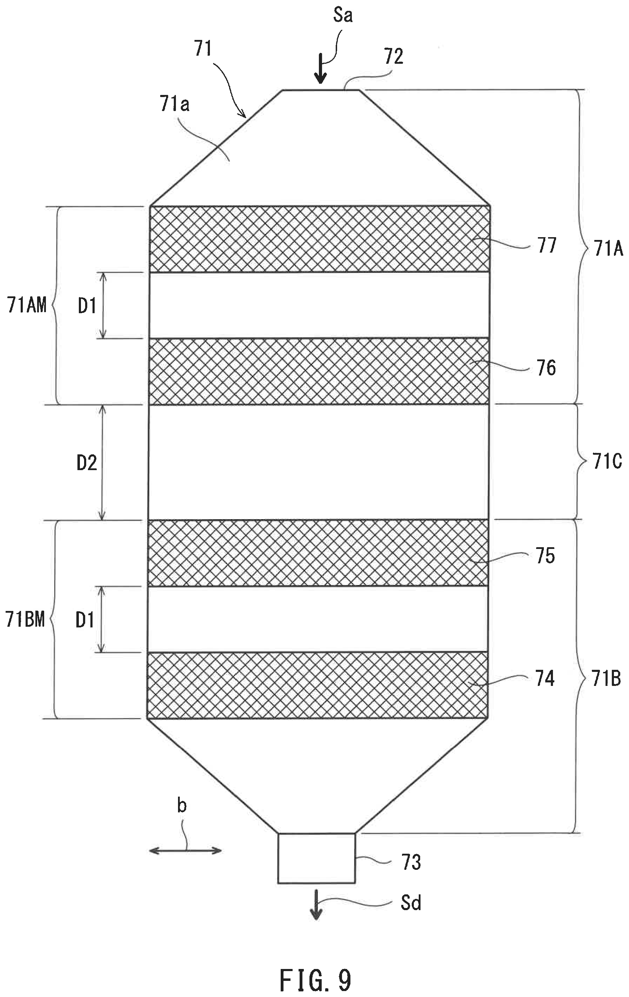

FIG. 9 is a side view showing another example of the vertically-elongated treatment container 71. In the example of FIG. 9, unlike FIG. 8, the adsorbent passage is not divided into the passages F in the coupling portion 71C between the treatment container 71A of the dryer 14 and the treatment container 71B of the adsorber 12. In the example of FIG. 9, the length of the coupling portion 71C in the vertical direction is increased, i.e., an interval D2 between the gas flow region 75 for the target gas and the gas flow region 76 for the drying gas is increased. For example, it is preferable that the interval D2 be an interval larger than twice the thickness T1 (FIG. 7) of the inside of the vertically-elongated treatment container 71 which is a region in which the adsorbent is present. Also in this case, the pressure loss of the gas is large when the gas passes through the coupling portion 71C in the vertical direction. Therefore, the target gas passing through the gas flow region 75 can be prevented from flowing into the treatment container 71A of the dryer 14, and the drying gas passing through the gas flow region 76 can be prevented from flowing into the treatment container 71B of the adsorber 12. Thus, the drying treatment in the treatment container 71A and the adsorption treatment in the treatment container 71B can be satisfactorily performed.

The foregoing has mainly described the regenerator 13, the dryer 14, the adsorber 12, and the like in the individual system 10. In the carbon dioxide separation system 100, the individual systems 10 are located so as to be lined up in the direction indicated by the arrow b. Therefore, the dryer 14 and the adsorber 12 in the carbon dioxide separation system 100 include the vertically-elongated treatment container pairs 71P located so as to be lined up in the direction indicated by the arrow b which is the horizontal direction orthogonal to the thickness direction a of the vertically-elongated treatment container 71.

According to the present embodiment, since the vertically-elongated treatment container pairs 71P each including the two vertically-elongated treatment containers 71 lined up so as to be spaced apart from each other in the thickness direction a are included, the throughput of the adsorber 12 and the dryer 14 can be increased. Moreover, the vertically-elongated treatment container pairs 71P are located so as to be lined up in the direction indicated by the arrow b, i.e., in the horizontal direction orthogonal to the thickness direction a of the vertically-elongated treatment container 71. Then, since the target gas common supply passage 91, the target gas common discharge passage 92, the drying gas common supply passage 93, and the drying gas common discharge passage 94 common to the vertically-elongated treatment containers 71 of the vertically-elongated treatment container pairs 71P are located between the two vertically-elongated treatment containers 71 of each vertically-elongated treatment container pair 71P, the configuration can be simplified.

Moreover, in the present embodiment, the regeneration treatment containers 13a are included for one vertically-elongated treatment container 71, and the adsorbent is sequentially supplied from the regeneration treatment containers 13a to the vertically-elongated treatment container 71. Therefore, it becomes easy to continuously perform the treatments in the dryer 14 and the adsorber 12 while continuously discharging the adsorbent from the lower end of the vertically-elongated treatment container 71.

In the present embodiment, each of the target gas and the drying gas changes its direction once, and passes through the inside of the vertically-elongated treatment container 71 twice. However, each of the target gas and the drying gas may change its direction twice or more, and pass through the inside of the vertically-elongated treatment container 71 three times or more. As above, since each of the target gas and the drying gas changes its direction and passes through the inside of the vertically-elongated treatment container 71 multiple times, the carbon dioxide adsorption performance of the adsorber 2 can be improved, and the adsorbent drying performance of the dryer 4 can be improved. Moreover, in this case, as described in the second configuration example of Embodiment 1, it is more preferable that the gas turn upward when changing its direction. To be specific, regarding the target gas, it is preferable that when n is an integer of 1 or more, the gas flow region through which the target gas supplied to a portion of the vertically-elongated treatment container 71 which corresponds to the treatment container 71B of the adsorber 12 passes when passing though the treatment container 71B for the (n+1)-th time be located above the gas flow region through which the target gas passes when passing through the treatment container 71B for the n-th time. Moreover, regarding the drying gas, it is preferable that when n is an integer of 1 or more, the gas flow region through which the drying gas supplied to a portion of the vertically-elongated treatment container 71 which corresponds to the treatment container 71A of the dryer 14 passes when passing through the treatment container 71A for the (n+1)-th time be located above the gas flow region through which the drying gas passes when passing through the treatment container 71A for the n-th time.

As described above, when each of the target gas and the drying gas changes its direction and passes through the inside of the vertically-elongated treatment container 71 multiple times, each of the target gas and the drying gas is caused to pass through the inside of the vertically-elongated treatment container 71 an even number of times. Therefore, in addition to the target gas common supply passage 91 and the drying gas common supply passage 93, the target gas common discharge passage 92 and the drying gas common discharge passage 94 can be located between the two vertically-elongated treatment containers 71 constituting each vertically-elongated treatment container pair 71P.

Moreover, in the present embodiment, the treatment container of the specific structural body 60B shown in FIG. 4 is applied to each of the dryer 14 and the adsorber 12, and the treatment containers of the two specific structural bodies 60B are integrated with each other to constitute the vertically-elongated treatment container 71. Here, the vertically-elongated treatment container 71 may be constituted by the specific structural bodies 60A shown in FIG. 2 instead of the specific structural bodies 60B. In this case, each of the target gas and the drying gas passes through the inside of the vertically-elongated treatment container 71 only once.

Moreover, in the present embodiment, the regenerator 13 is located above the vertically-elongated treatment container 71. However, the regenerator 13 may be located below the vertically-elongated treatment container 71, and the adsorbent discharged from the regenerator 13 may be supplied to the receiving port 72 of the upper end of the vertically-elongated treatment container 71 by the adsorbent transporter. When the regenerator 13 is located above the vertically-elongated treatment container 71 as in the present embodiment, condensed water adheres to the adsorbent supplied from the regenerator 13 to the vertically-elongated treatment container 71, but the adsorbent is dried by the drying gas in the vertically-elongated treatment container 71. Therefore, the adsorbent discharged from the discharger 73 of the lower end of the vertically-elongated treatment container 71 is dry. Thus, the handling of the adsorbent is easy, which is preferable from the viewpoint that the adsorbent is satisfactorily transported by the adsorbent transporter 15.

Moreover, in the present embodiment, the individual system 10 includes the two vertically-elongated treatment containers 71. However, the individual system 10 may include one vertically-elongated treatment container 71. In this case, in the carbon dioxide separation system including the individual systems coupled to each other, the vertically-elongated treatment containers 71 are located so as to be lined up in the horizontal direction orthogonal to the thickness direction a of the vertically-elongated treatment container 71. Moreover, the arrangement and the configuration of the adsorbent transporter 15 may be suitably changed in accordance with the arrangement of the vertically-elongated treatment containers 71, the number of vertically-elongated treatment containers 71, and the like.

Moreover, the present embodiment has described the carbon dioxide separation system 100 including the individual systems 10 coupled to each other. However, one individual system 10 may be configured as the carbon dioxide separation system. In this case, the individual system 10 as the carbon dioxide separation system may include two vertically-elongated treatment containers 71 or may include one vertically-elongated treatment container 71.

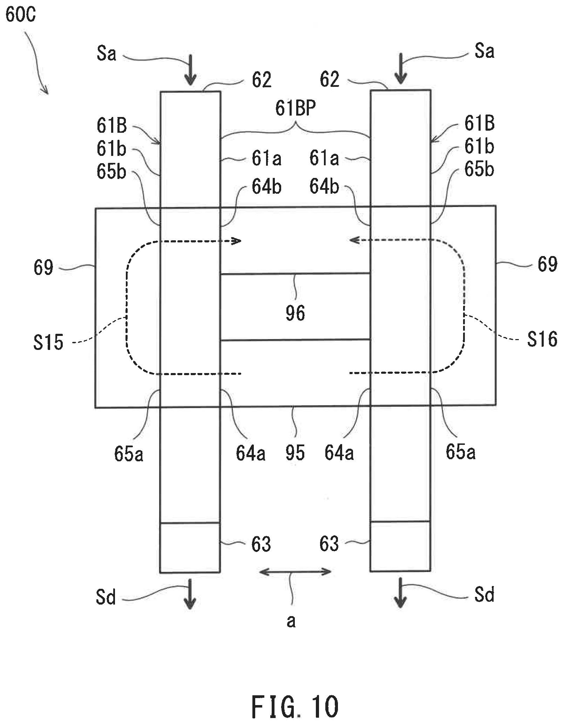

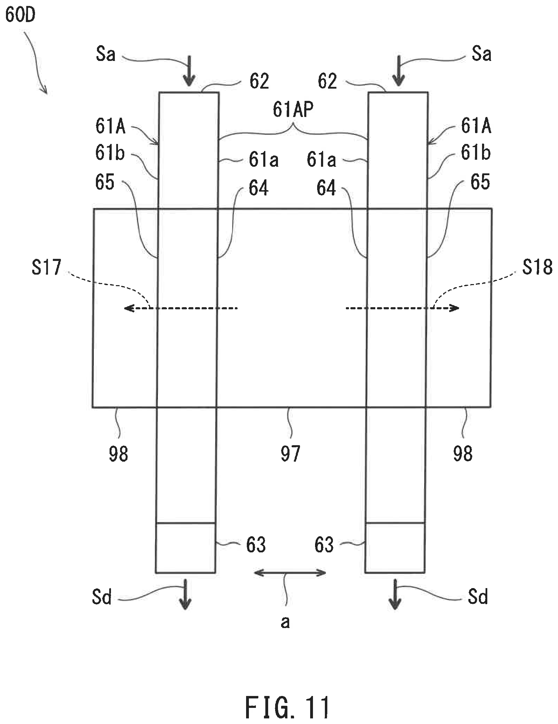

In Embodiment 2, as shown in FIG. 6, the individual systems 10 each including the two vertically-elongated treatment containers 71 lined up so as to be spaced apart from each other in the thickness direction a are located so as to be lined up in the horizontal direction orthogonal to the thickness direction a of the vertically-elongated treatment container 71. To be specific, the vertically-elongated treatment container pairs 71P each including the two vertically-elongated treatment containers 71 lined up so as to be spaced apart from each other in the thickness direction a are located so as to be lined up in the horizontal direction orthogonal to the thickness direction a of the vertically-elongated treatment container 71. Similarly, in Embodiment 1, the specific structural body applied to at least one of the adsorber or the dryer may be configured as shown in FIGS. 10 and 11.

FIG. 10 is a front view showing a third configuration example of the specific structural body in Embodiment 1. In a specific structural body 60C shown in FIG. 10, treatment container pairs 61BP each including the two treatment containers 61B shown in FIGS. 4 and 5 and lined up so as to be spaced apart from each other in the thickness direction a of the treatment container 61B are located so as to be lined up in the horizontal direction orthogonal to the thickness direction a of the treatment container 61B. The horizontal direction orthogonal to the thickness direction a of the treatment container 61B is a depth direction perpendicular to the paper surface of FIG. 10.

In the specific structural body 60C, a gas common supply passage 95 and a gas common discharge passage 96 are located between the two treatment containers 61B of each treatment container pair 61BP so as to extend in the horizontal direction orthogonal to the thickness direction a of the treatment container 61B. The gas common supply passage 95 is a common supply passage for the gas to be supplied to the treatment containers 61B of the treatment container pairs 61BP, and the gas common discharge passage 96 is a common discharge passage for the gas discharged from the treatment containers 61B of the treatment container pairs 61BP. Moreover, the gas turn lids 69 are located on the respective side surfaces 61b that are outer surfaces of the two treatment containers 61B constituting the treatment container pair 61BP. Each of the gas turn lids 69 surrounds and covers the two gas flow regions 65a and 65b and a region between these two regions 65a and 65b together.

In the specific structural body 60C, the gas supplied to the two treatment containers 61B through the gas common supply passage 95 passes through the gas flow regions 64a, 65a, 65b, and 64b as shown by arrows S15 and S16, and is discharged through the gas common discharge passage 96. Moreover, the gas and the gas flowing in opposite directions in the treatment container 61B may be prevented from interfering with each other in such a manner that the non-passage regions E shown in FIG. 8 are located in a portion of the treatment container 61B which is located between the gas flow regions 64a and 64b. The same is true for the treatment container 61B shown in FIGS. 4 and 5.

In the specific structural body 60C, the treatment container pairs 61BP each including the two treatment containers 61B are located so as to be lined up in the horizontal direction orthogonal to the thickness direction a of the treatment container 61B. However, the specific structural body 60C may include only one treatment container pair 61BP. Moreover, the treatment containers 61B may be located so as to be lined up in the horizontal direction orthogonal to the thickness direction a of the treatment container 61B.

FIG. 11 is a front view showing a fourth configuration example of the specific structural body according to Embodiment 1. In a specific structural body 60D shown in FIG. 11, treatment container pairs 61AP each including the two treatment containers 61A shown in FIGS. 2 and 3 and lined up so as to be spaced apart from each other in the thickness direction a of the treatment container 61A are located so as to be lined up in the horizontal direction orthogonal to the thickness direction a of the treatment container 61A. The horizontal direction orthogonal to the thickness direction a of the treatment container 61A is a direction perpendicular to the paper surface of FIG. 11.

In the specific structural body 60D, a gas common supply passage 97 is located between the two treatment containers 61A of each treatment container pair 61AP so as to extend in the horizontal direction orthogonal to the thickness direction a of the treatment container 61A. The gas common supply passage 97 is a common supply passage for the gas to be supplied to the treatment containers 61A of the treatment container pairs 61AP. Gas common discharge passages 98 are located on the respective side surfaces 61b, which are outer surfaces of the two treatment containers 61A constituting the treatment container pair 61AP, so as to extend in the horizontal direction orthogonal to the thickness direction a of the treatment container 61A. The gas common discharge passages 98 are common discharge passages for the gas discharged from the treatment containers 61A of the treatment container pairs 61AP.

In the specific structural body 60D, the gas supplied through the gas common supply passage 97 to the two treatment containers 61A passes through the gas flow regions 64 and 65 as shown by arrows S17 and S18, and is discharged through the gas common discharge passages 98.

In the specific structural body 60D, the treatment container pairs 61AP each including the two treatment containers 61A are located so as to be lined up in the horizontal direction orthogonal to the thickness direction a of the treatment container 61A. However, the specific structural body 60D may include only one treatment container pair 61AP. Moreover, the treatment containers 61A may be located so as to be lined up in the horizontal direction orthogonal to the thickness direction a of the treatment container 61A.

### Embodiment 3

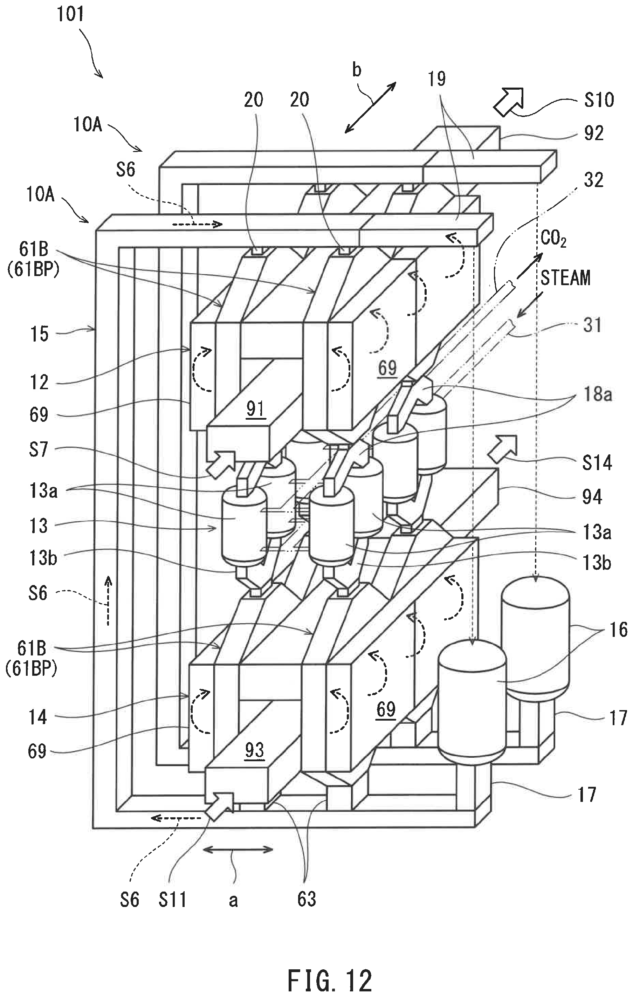

FIG. 12 is a perspective view schematically showing the appearance of one example of the carbon dioxide separation system according to Embodiment 3. In FIG. 12, the same reference signs as those in FIG. 6 are used for portions corresponding to those in FIG. 6.

A carbon dioxide separation system 101 shown in FIG. 12 is a system including individual systems 10A lined up in the direction indicated by the arrow b and coupled to each other. The individual systems 10A are the same in configuration as each other. Moreover, FIG. 12 shows an example in which the two individual systems 10A are coupled to each other. However, three or more individual systems 10A may be lined up in the direction indicated by the arrow b and coupled to each other.

The carbon dioxide separation system 101 shown in FIG. 12 differs from the carbon dioxide separation system 100 shown in FIG. 6 in terms of the configuration of the individual system 10A. Hereinafter, the individual system 10A will be described.

The individual system 10A includes the adsorber 12, the regenerator 13, the dryer 14, the adsorbent transporter 15, and the like. In the individual system 10A, unlike the individual system 10 shown in FIG. 6, the adsorber 12, the regenerator 13, and the dryer 14 are located in this order from top. Then, each of the adsorber 12 and the dryer 14 is configured by using the treatment container pair 61BP shown in FIG. 10.

Supply switchers 20 are connected to respective receiving ports of the two treatment containers 61B of the adsorber 12. Each supply switcher 20 can switch between a state in which the supply switcher 20 receives the adsorbent transported by the adsorbent transporter 15 and supplies the adsorbent to the treatment container 61B and a state in which the supply switcher 20 allows the adsorbent to flow to the downstream side without receiving the adsorbent. By the two supply switchers 20, the adsorbent can be alternately supplied to the two treatment containers 61B, and the adsorbent can be supplied to the classifier 19 at a predetermined timing. The target gas common supply passage 91 and the target gas common discharge passage 92 common to the individual systems 10A are located between the two treatment containers 61B of the adsorber 12.

The regenerator 13 includes the two regeneration treatment containers 13a for one treatment container 61B of the adsorber 12. Feeders 18a are installed at respective lower ends of the two treatment containers 61B of the adsorber 12. Each of the feeders 18a distributes and supplies the adsorbent, discharged from the lower end, to the two regeneration treatment containers 13a. Moreover, each discharger 13b is located at the lower portions of the two regeneration treatment containers 13a. The discharger 13b sequentially discharges the adsorbent of the two regeneration treatment containers 13a to the receiving port of the treatment container 61B of the dryer 14. One regeneration treatment container 13a or three or more regeneration treatment containers 13a may be installed for one treatment container 61B of the adsorber 12.

The drying gas common supply passage 93 and the drying gas common discharge passage 94 common to the individual systems 10A are located between the two treatment containers 61B of the dryer 14. The dischargers 63 that discharge the adsorbent downward are located at respective lower ends of the two treatment containers 61B of the dryer 14. The adsorbent discharged by the dischargers 63 is supplied to the adsorbent transporter 15.

The foregoing has mainly described the adsorber 12, the regenerator 13, the dryer 14, and the like in the individual system 10A. In the carbon dioxide separation system 101, the individual systems 10A are located so as to be lined up in the direction indicated by the arrow b. Therefore, each of the adsorber 12 and the dryer 14 in the carbon dioxide separation system 101 includes the specific structural body 60C including the treatment container pairs 61BP located so as to be lined up in the direction indicated by the arrow b which is the horizontal direction orthogonal to the thickness direction a of the treatment container 61B shown in FIG. 10.

In the present embodiment, since each of the adsorber 12 and the dryer 14 includes the treatment container pairs 61BP each including the two treatment containers 61B lined up so as to be spaced apart from each other in the thickness direction a, the throughput of the adsorber 12 and the dryer 14 can be increased. Moreover, since the target gas common supply passage 91 and the target gas common discharge passage 92 common to the treatment containers 61B of the treatment container pairs 61BP constituting the adsorber 12 are included, the configuration can be simplified. Moreover, since the drying gas common supply passage 93 and the drying gas common discharge passage 94 common to the treatment containers 61B of the treatment container pairs 61BP constituting the dryer 14 are included, the configuration can be simplified. Furthermore, the pressure loss of the target gas supplied to the adsorber 12 can be reduced, and the pressure loss of the drying gas supplied to the dryer 14 can be reduced.

### Embodiment 4

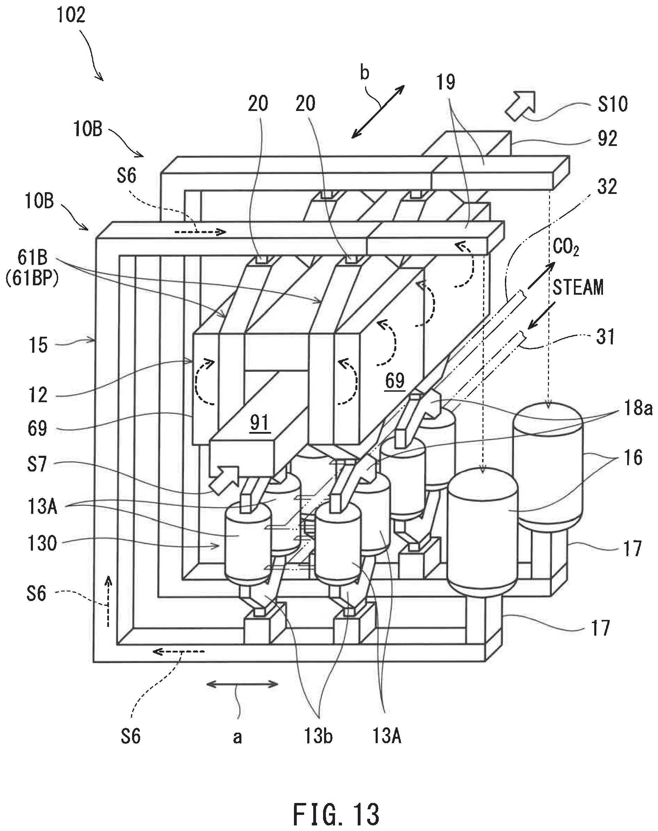

FIG. 13 is a perspective view schematically showing the appearance of one example of the carbon dioxide separation system according to Embodiment 4. In FIG. 13, the same reference signs as those in FIG. 12 are used for portions corresponding to those in FIG. 12.

A carbon dioxide separation system 102 shown in FIG. 13 is a system including individual systems 10B lined up in the direction indicated by the arrow b and coupled to each other. The individual systems 10B are the same in configuration as each other. Moreover, FIG. 13 shows an example in which the two individual systems 10B are coupled to each other. However, three or more individual systems 10B may be lined up in the direction indicated by the arrow b and coupled to each other.

The carbon dioxide separation system 102 shown in FIG. 13 differs from the carbon dioxide separation system 101 shown in FIG. 12 in terms of the configuration of the individual system 10B. Hereinafter, the individual system 10B will be described, and differences from FIG. 12 will be mainly described.

The individual system 10B includes the adsorber 12, a regenerator-dryer 130, the adsorbent transporter 15, and the like. The individual system 10B differs from the individual system 10A shown in FIG. 12 in that the individual system 10B includes the regenerator-dryer 130 instead of the regenerator 13 and the dryer 14 shown in FIG. 12.

The regenerator-dryer 130 includes two columnar treatment containers 13A for one treatment container 61B of the adsorber 12. One treatment container 13A or three or more treatment containers 13A may be installed for one treatment container 61B of the adsorber 12.

The adsorber 12 is the same in configuration as the adsorber 12 shown in FIG. 12. Moreover, as with FIG. 12, the target gas common supply passage 91 and the target gas common discharge passage 92 common to the individual systems 10B are located between the two treatment containers 61B of the adsorber 12.

As with the regeneration treatment container 13a shown in FIG. 12, the treatment container 13A performs the regeneration treatment in which carbon dioxide is released from the adsorbent, having adsorbed carbon dioxide by the adsorber 12, by bringing the desorption steam, supplied through the steam supply passage 31, into contact with the adsorbent. Thereafter, the treatment container 13A performs the drying treatment in which the adsorbent is dried. In the drying treatment, vacuum drying is performed after the stop of the supply of the desorption steam in the regeneration treatment. For example, the vacuum drying is performed in such a manner that: a vacuum pump that sucks and captures carbon dioxide in the regeneration treatment continuously operates; and a pressure-reduced state of the treatment container 13A is maintained for a predetermined period of time. Here, the treatment container 13A may be further reduced in pressure by installing another vacuum pump different from the above vacuum pump used for the regeneration treatment.

Moreover, in the drying treatment, drying using a drying gas may be performed in addition to the above-described vacuum drying. In this case, for example, the drying gas supply passage 41 and the drying gas discharge passage 42 shown in FIG. 1 are connected to the treatment container 13A. The drying using the drying gas in this case is performed by, for example, supplying the drying gas to the treatment container 13A for a predetermined period of time.

The discharger 13b is located at lower portions of the treatment containers 13A, and the adsorbent subjected to the drying treatment in the treatment containers 13A is supplied to the adsorbent transporter 15.

The foregoing has mainly described the adsorber 12, the regenerator-dryer 130, and the like in the individual system 10B. In the carbon dioxide separation system 102, the individual systems 10B are located so as to be lined up in the direction indicated by the arrow b. Therefore, the adsorber 12 in the carbon dioxide separation system 102 includes the specific structural body 60C (FIG. 10) including the treatment container pairs 61BP located so as to be lined up in the direction indicated by the arrow b which is the horizontal direction orthogonal to the thickness direction a of the treatment container 61B.

In the present embodiment, since the adsorber 12 includes the treatment container pairs 61BP each including the two treatment containers 61B lined up so as to be spaced apart from each other in the thickness direction a, the throughput of the adsorber 12 can be increased. Moreover, since the target gas common supply passage 91 and the target gas common discharge passage 92 common to the treatment containers 61B of the treatment container pairs 61BP constituting the adsorber 12 are included, the configuration can be simplified. Furthermore, the pressure loss of the target gas supplied to the adsorber 12 can be reduced.

### Embodiment 5

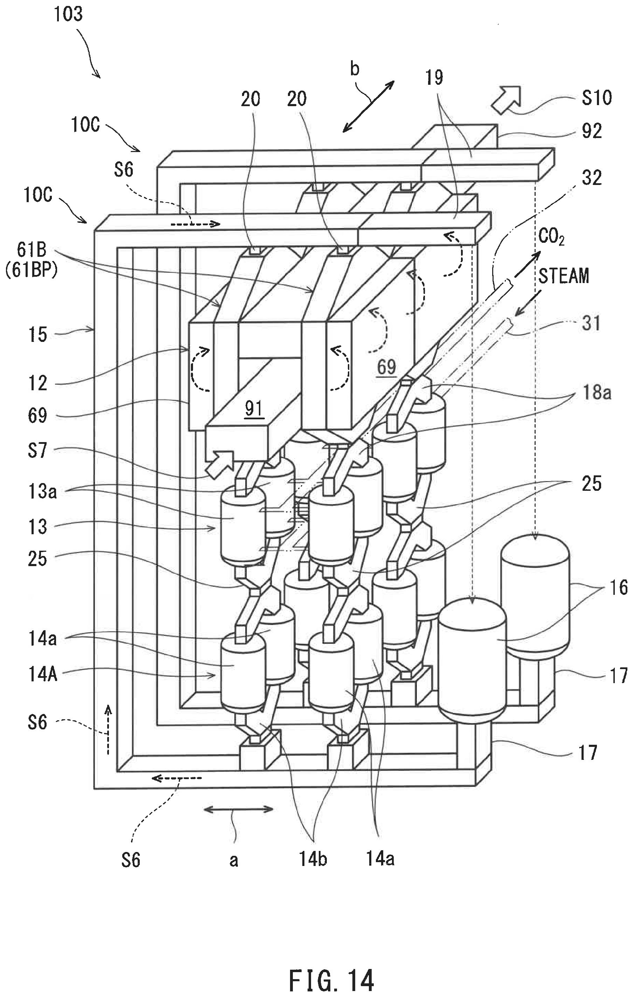

FIG. 14 is a perspective view schematically showing the appearance of one example of the carbon dioxide separation system according to Embodiment 5. In FIG. 14, the same reference signs as those in FIGS. 12 and 13 are used for portions corresponding to those in FIGS. 12 and 13.

A carbon dioxide separation system 103 shown in FIG. 14 is a system including individual systems 10C lined up in the direction indicated by the arrow b and coupled to each other. The individual systems 10C are the same in configuration as each other. Moreover, FIG. 14 shows an example in which the two individual systems 10C are coupled to each other. However, three or more individual systems 10C may be lined up in the direction indicated by the arrow b and coupled to each other.

The carbon dioxide separation system 103 shown in FIG. 14 differs from the carbon dioxide separation systems 101 and 102 shown in FIGS. 12 and 13 in terms of the configuration of the individual system 10C. Hereinafter, the individual system 10C will be described, and differences from FIGS. 12 and 13 will be mainly described.

The individual system 10C includes the adsorber 12, the regenerator 13, a dryer 14A, the adsorbent transporter 15, and the like. The individual system 10C differs from the individual system 10A shown in FIG. 12 in that the individual system 10C includes the dryer 14A that performs vacuum drying, instead of the dryer 14 shown in FIG. 12. Moreover, the individual system 10C differs from the individual system 10B shown in FIG. 13 in that the individual system 10C includes the regenerator 13 and the dryer 14A instead of the regenerator-dryer 130 shown in FIG. 13. As with FIG. 12, the regenerator 13 shown in FIG. 14 includes the columnar regeneration treatment containers 13a. Moreover, the dryer 14A includes columnar drying treatment containers 14a.

In the individual system 10C, the regenerator 13 is located below the adsorber 12, and the dryer 14A is located below the regenerator 13. The two columnar regeneration treatment containers 13a of the regenerator 13 are located for one treatment container 61B of the adsorber 12 so as to be located below the treatment container 61B through the feeder 18a, and the two columnar drying treatment containers 14a of the dryer 14A are located for one treatment container 61B of the adsorber 12 so as to be located below the two regeneration treatment containers 13a of the regenerator 13 through a discharge feeder 25. One treatment container 13a or three or more treatment containers 13a may be installed for one treatment container 61B of the adsorber 12, and one the treatment container 14a or three or more treatment containers 14a may be installed for one treatment container 61B of the adsorber 12.

The adsorber 12 is similar in configuration to the adsorber 12 shown in FIGS. 12 and 13. The target gas common supply passage 91 and the target gas common discharge passage 92 common to the individual systems 10C are located between the two treatment containers 61B of the adsorber 12 of the individual system 10C.

In the individual system 10C, the adsorbent discharged from the lower ends of the treatment containers 61B is supplied to the regeneration treatment containers 13a by the feeders 18a installed at the respective lower ends of the two treatment containers 61B of the adsorber 12.

As with the regeneration treatment container 13a shown in FIG. 12, the regeneration treatment container 13a of the regenerator 13 performs the regeneration treatment in which carbon dioxide is released from the adsorbent, having adsorbed carbon dioxide by the adsorber 12, by bringing the desorption steam, supplied through the steam supply passage 31, into contact with the adsorbent. The discharge feeder 25 is located at lower portions of the regeneration treatment containers 13a. The discharge feeder 25 discharges the adsorbent from the regeneration treatment containers 13a and supplies the adsorbent to the drying treatment containers 14a of the dryer 14A.

The drying treatment container 14a of the dryer 14A performs the drying treatment in which the adsorbent is dried by vacuum drying. The vacuum drying is performed in such a manner that the pressure-reduced state of the drying treatment container 14a by the vacuum pump is maintained for a predetermined period of time. As the vacuum pump used herein, the vacuum pump for regeneration which is used to suck and capture carbon dioxide in the regenerator 13 may be used, or another vacuum pump different from the vacuum pump for regeneration may be used. Moreover, the pressure of the drying treatment container 14a may be reduced stepwise by using the vacuum pump for regeneration and another vacuum pump in order.

Moreover, in the drying treatment of the dryer 14A, drying using a drying gas may be performed in addition to the above-described vacuum drying. In this case, for example, the drying gas supply passage 41 and the drying gas discharge passage 42 shown in FIG. 1 are connected to the drying treatment container 14a. The drying using the drying gas in this case is performed by, for example, supplying the drying gas to the drying treatment container 14a for a predetermined period of time.

A discharger 14b is located at lower portions of the two drying treatment containers 14a, and the adsorbent subjected to the drying treatment in the two drying treatment containers 14a is sequentially supplied to the adsorbent transporter 15 by the discharger 14b.

The foregoing has mainly described the individual system 10C. In the carbon dioxide separation system 103, the individual systems 10C are located so as to be lined up in the direction indicated by the arrow b. Therefore, the adsorber 12 in the carbon dioxide separation system 103 includes the specific structural body 60C including the treatment container pairs 61BP located so as to be lined up in the direction indicated by the arrow b which is the horizontal direction orthogonal to the thickness direction a of the treatment container 61B shown in FIG. 10.

In the present embodiment, as with Embodiment 4, since the adsorber 12 includes the treatment container pairs 61BP each including the two treatment containers 61B lined up so as to be spaced apart from each other in the thickness direction a, the throughput of the adsorber 12 can be increased. Moreover, since the target gas common supply passage 91 and the target gas common discharge passage 92 common to the treatment containers 61B of the treatment container pairs 61BP constituting the adsorber 12 are included, the configuration can be simplified. Furthermore, the pressure loss of the target gas supplied to the adsorber 12 can be reduced.

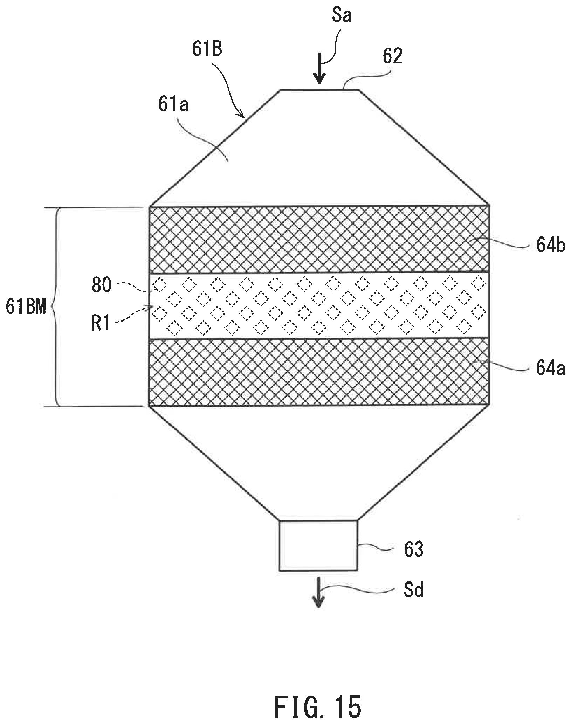

FIG. 15 is a side view showing another example of the treatment container 61B of the specific structural body 60B shown in FIG. 4, etc.

In the treatment container 61B shown in FIG. 15 with reference to FIG. 4, the gas flow regions 64a and 64b are located on each of the side surfaces 61a and 61b located in the treatment container 61B and opposed to each other in the thickness direction a of the main portion 61BM and are adjacent to each other in the vertical direction. Rod-shaped objects 80 are arranged in a portion R1 between the gas flow regions 64a and 64b with gaps through which the adsorbent is allowed to pass. The rod-shaped objects 80 extend between the side surfaces 61a and 61b opposed to each other in the thickness direction a of the main portion 61BM. In order to prevent the gas from flowing in the vertical direction, as shown in FIG. 15, it is preferable that the rod-shaped objects 80 be arranged in multiple stages in a side view, and it is more preferable that the rod-shaped objects 80 be arranged in a staggered manner. Moreover, it is preferable that the rod-shaped objects 80 arranged in multiple stages be densely arranged in a plan view such that the rod-shaped objects 80 arranged in stages adjacent to each other in an upper-lower direction overlap each other.

Since the rod-shaped objects 80 are arranged as above, the pressure loss of the gas attempting to pass through the treatment container 61B in the vertical direction increases, and this can prevent the gas from passing through the treatment container 61B in the vertical direction. Therefore, the gas and the gas flowing in opposite directions in the treatment container 61B can be prevented from interfering with each other. Thus, the distance between the gas flow regions 64a and 64b adjacent to each other can be reduced, and the height of the treatment container 61B can be reduced. Accordingly, the height of the carbon dioxide separation system as a whole can be reduced. Moreover, since a large number of rod-shaped objects 80 are arranged in a staggered manner as shown in FIG. 15, the downward flow of the adsorbent can be divided into a large number of flows, and the uniform downward flow of the adsorbent can be maintained without being obstructed. Moreover, since the rod-shaped objects 80 are only required to be installed in the internal space of the treatment container 61B, the production is easy.

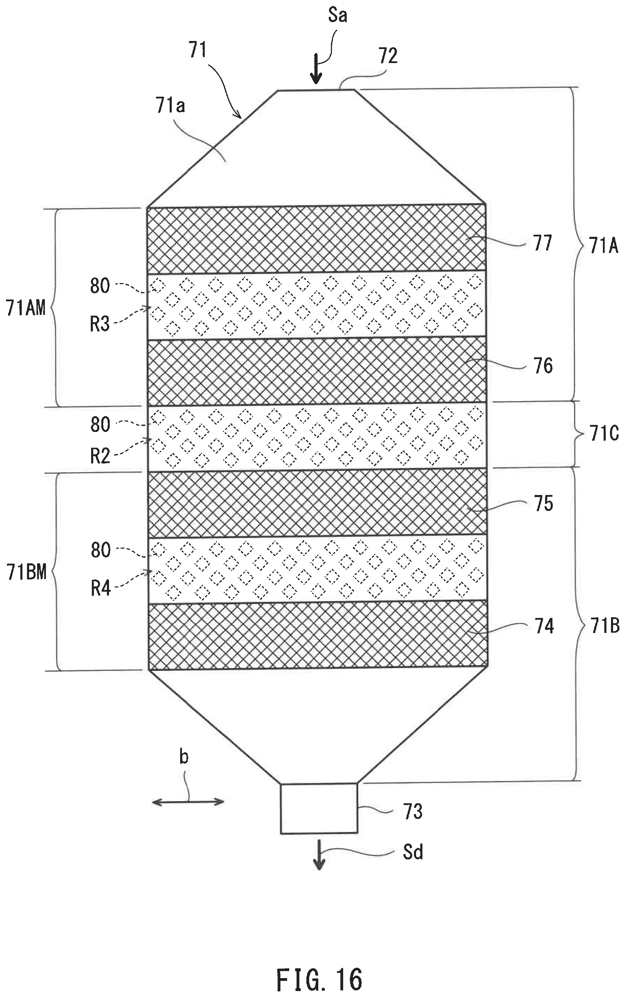

FIG. 16 is a side view showing another example of the vertically-elongated treatment container 71 used in the dryer 14 and the adsorber 12 shown in FIG. 6, etc.

In the vertically-elongated treatment container 71 shown in FIG. 16, the rod-shaped objects 80 are arranged in an internal portion R2 of the coupling portion 71C between the treatment container 71A of the dryer 14 and the treatment container 71B of the adsorber 12 with gaps through which the adsorbent is allowed to pass.

Moreover, as shown in FIG. 7, the gas flow regions 76 and 77 are located on each of the side surfaces 71a and 71b located in the treatment container 71A and opposed to each other in the thickness direction a of the main portion 71AM and are adjacent to each other in the vertical direction. The rod-shaped objects 80 are arranged in a portion R3 between the gas flow regions 76 and 77 with gaps through which the adsorbent is allowed to pass.

Moreover, the rod-shaped objects 80 are arranged in a portion R4 between the gas flow regions 76 and 77 with gaps through which the adsorbent is allowed to pass. The gas flow regions 76 and 77 are located on each of the side surfaces 71a and 71b (see FIG. 7) located in the treatment container 71B and opposed to each other in the thickness direction a of the main portion 71BM and are adjacent to each other in the vertical direction.

The method of installing and arranging the rod-shaped objects 80 in the above portions R2, R3, and R4 inside the vertically-elongated treatment container 71 is similar to the method of installing and arranging the rod-shaped objects 80 installed inside the treatment container 61B shown in FIG. 15. In a side view, it is preferable that the rod-shaped objects 80 be arranged in multiple stages, and it is more preferable that the rod-shaped objects 80 be arranged in a staggered manner. Moreover, it is preferable that the rod-shaped objects 80 arranged in multiple stages be densely arranged such that in a plan view, the rod-shaped objects 80 in stages adjacent to each other in the upper-lower direction overlap each other.

Since the rod-shaped objects 80 are arranged in the internal portion R2 of the coupling portion 71C as above, the pressure loss of the gas attempting to pass through the internal portion R2 of the coupling portion 71C in the vertical direction increases, and this can prevent the gas from passing through the internal portion R2 of the coupling portion 71C in the vertical direction. Therefore, the target gas passing through the gas flow region 75 can be prevented from flowing into the treatment container 71A of the dryer 14, and the drying gas passing through the gas flow region 76 can be prevented from flowing into the treatment container 71B of the adsorber 12. Thus, the drying treatment in the treatment container 71A and the adsorption treatment in the treatment container 71B can be satisfactorily performed. Moreover, the length of the coupling portion 71C in the vertical direction can be reduced, and the height of the vertically-elongated treatment container 71 can be reduced. Moreover, since a large number of rod-shaped objects 80 are arranged in a staggered manner, the downward flow of the adsorbent can be divided into a large number of flows, and the uniform downward flow of the adsorbent can be maintained without being obstructed. Moreover, since the rod-shaped objects 80 are only required to be installed in the internal space of the vertically-elongated treatment container 71, the production is easy.

Moreover, since the rod-shaped objects 80 are arranged in the above portion R3 inside the treatment container 71A, effects similar to those obtained when the rod-shaped objects 80 are arranged in the predetermined portion R1 inside the treatment container 61B as shown in FIG. 15 can be obtained. Similarly, since the rod-shaped objects 80 are arranged in the above portion R4 inside the treatment container 71B, effects similar to those obtained when the rod-shaped objects 80 are arranged in the predetermined portion R1 inside the treatment container 61B as shown in FIG. 15 can be obtained.

In FIGS. 15 and 16, the vertical sectional shape of the rod-shaped object 80 is a quadrangular shape, but is not limited to this, and may be a polygonal shape, such as a triangular or hexagonal shape, or may be a circular shape. It is preferable that when the vertical sectional shape of the rod-shaped object 80 is a polygonal shape, such as a quadrangular shape, the rod-shaped objects 80 be arranged such that upper surfaces of the rod-shaped objects 80 are inclined surfaces, and therefore, the adsorbent easily moves downward along the surfaces of the rod-shaped objects 80. Moreover, the rod-shaped object 80 may be a solid object or may be a hollow tubular object.

From the foregoing description, numerous modifications and other embodiments of the present disclosure are obvious to those skilled in the art. Accordingly, the foregoing description is to be construed as illustrative only, and is provided for the purpose of teaching those skilled in the art the best mode for carrying out the present disclosure. The structural and/or functional details may be substantially modified without departing from the scope of the present disclosure.

### Aspects of Present Disclosure

A carbon dioxide separation system according to a first aspect of the present disclosure includes: an adsorber that is supplied with a target gas containing carbon dioxide and causes particulate adsorbent to adsorb the carbon dioxide in the target gas by bringing the target gas into contact with the adsorbent; a regenerator that causes the adsorbent, which has adsorbed the carbon dioxide, to release the carbon dioxide by bringing steam into contact with the adsorbent; and a dryer that is supplied with a drying gas and dries the adsorbent, which has contacted the steam, by bringing the drying gas into contact with the adsorbent, wherein: at least one of the adsorber or the dryer includes a specific structural body; the specific structural body includes a treatment container in which the adsorbent moves downward by its own weight; the treatment container includes a main portion having an elongated horizontal cross section and extending in a vertical direction; and the main portion includes a gas flow region in predetermined opposing regions of both side surfaces of the treatment container, the side surfaces being opposed to each other in a thickness direction of the treatment container, the gas flow region being a region that does not allow the adsorbent to pass therethrough, supplies the gas, supplied to the specific structural body, to an inside of the treatment container, and discharges the gas, having passed through the inside of the treatment container in the thickness direction of the treatment container, from the inside of the treatment container to an outside.

According to this configuration, at least one of the adsorber or the dryer includes the specific structural body, and the specific structural body includes the treatment container in which the adsorbent moves downward by its own weight. The treatment container includes the main portion having an elongated horizontal cross section and extending in the vertical direction. Predetermined opposing regions of the side surfaces of the main portion which are opposed to each other in the thickness direction of the treatment container are the gas flow regions that do not allow the adsorbent to pass therethrough but allow the gas to pass therethrough. Then, the gas supplied to the specific structural body passes through the inside of the treatment container in the thickness direction of the treatment container via the opposing gas flow regions of the side surfaces of the treatment container. Thus, the travel distance of the gas, supplied to the specific structural body, in the treatment container can be reduced, and the pressure loss of the gas passing through the treatment container in which the adsorbent is present can be reduced. Moreover, the flow rate of the gas can be increased by increasing the areas of the gas flow regions of the side surfaces of the treatment container. Thus, when the adsorber includes the specific structural body, the pressure loss of the target gas supplied to the adsorber can be reduced. Moreover, when the dryer includes the specific structural body, the pressure loss of the drying gas supplied to the dryer can be reduced. Since the pressure loss of the target gas and the pressure loss of the drying gas are reduced as above, the energy cost required to supply the target gas and the drying gas can be reduced. For example, the electric power consumption of a fan and the like used to supply the target gas and the drying gas can be reduced.

The carbon dioxide separation system according to a second aspect of the present disclosure is the carbon dioxide separation system according to the first aspect, wherein: the specific structural body includes the treatment container that is a group of two treatment containers lined up so as to be spaced apart from each other in the thickness direction of the treatment container; and a gas common supply passage for the gas to be supplied to the two treatment containers is located between the two treatment containers.

According to this configuration, since the specific structural body includes the two treatment containers, the throughput of the specific structural body can be increased. In addition, since the gas common supply passage is located between the two treatment containers, the configuration can be simplified.

The carbon dioxide separation system according to a third aspect of the present disclosure is the carbon dioxide separation system according to the first aspect, wherein the specific structural body includes the treatment container that is a plurality of treatment containers located so as to be lined up in a horizontal direction orthogonal to the thickness direction of the treatment container, the carbon dioxide separation system further including: a gas common supply passage for the gas to be supplied to the treatment containers; and a gas common discharge passage for the gas discharged from the treatment containers.

According to this configuration, since the specific structural body includes the treatment containers, the throughput of the specific structural body can be increased. In addition, since the gas common supply passage and the gas common discharge passage common to the treatment containers are included, the configuration can be simplified.

The carbon dioxide separation system according to a fourth aspect of the present disclosure is the carbon dioxide separation system according to the first aspect, wherein: the specific structural body includes treatment container pairs located so as to be lined up in a horizontal direction orthogonal to the thickness direction of the treatment container; each of the treatment container pairs includes the treatment container that is a group of two treatment containers lined up so as to be spaced apart from each other in the thickness direction of the treatment container; a gas common supply passage for the gas to be supplied to the treatment containers of the treatment container pairs is located between the two treatment containers of each treatment container pair; and a gas common discharge passage for the gas discharged from the treatment containers of the treatment container pairs is located between the two treatment containers of each treatment container pair.

According to this configuration, since the specific structural body includes the treatment container pairs each including the two treatment containers lined up so as to be spaced apart from each other in the thickness direction, the throughput of the specific structural body can be increased. Moreover, since the treatment container pairs are located so as to be lined up in the horizontal direction orthogonal to the thickness direction of the treatment container, and the gas common supply passage and the gas common discharge passage common to the treatment containers of the treatment container pairs are located between the two treatment containers of each treatment container pair, the configuration can be simplified.

The carbon dioxide separation system according to a fifth aspect of the present disclosure is the carbon dioxide separation system according to any one of the first to fourth aspects, wherein: the regenerator is located below the adsorber; the dryer is located below the regenerator; and each of the adsorber and the dryer includes the specific structural body.

According to this configuration, since each of the adsorber and the dryer includes the specific structural body, the pressure loss of the target gas supplied to the adsorber can be reduced, and the pressure loss of the drying gas supplied to the dryer can be reduced.

The carbon dioxide separation system according to a sixth aspect of the present disclosure is the carbon dioxide separation system according to the first aspect, wherein: the adsorber is located below the dryer; each of the adsorber and the dryer includes the specific structural body; and the carbon dioxide separation system includes a vertically-elongated treatment container configured by integrating the treatment container of the dryer and the treatment container of the adsorber through a coupling portion.

According to this configuration, since the carbon dioxide separation system includes the vertically-elongated treatment container configured by integrating the treatment container of the dryer and the treatment container of the adsorber through the coupling portion, the configuration can be simplified. For example, a discharger that discharges the adsorbent from the treatment container of the dryer to the treatment container of the adsorber can be omitted.

The carbon dioxide separation system according to a seventh aspect of the present disclosure is the carbon dioxide separation system according to the sixth aspect, wherein the coupling portion prevents the drying gas supplied to the dryer from flowing into the adsorber and prevents the target gas supplied to the adsorber from flowing into the dryer.

According to this configuration, the target gas can be prevented from flowing into the treatment container of the dryer, and the drying gas can be prevented from flowing into the treatment container of the adsorber. Thus, the drying treatment that dries the adsorbent by the drying gas and the adsorption treatment that causes the adsorbent to adsorb carbon dioxide contained in the target gas can be satisfactorily performed.

The carbon dioxide separation system according to an eighth aspect of the present disclosure is the carbon dioxide separation system according to the sixth or seventh aspect, wherein: the carbon dioxide separation system includes the vertically-elongated treatment container that is a group of two vertically-elongated treatment containers lined up so as to be spaced apart from each other in a thickness direction of the vertically-elongated treatment container; a drying gas common supply passage for the drying gas to be supplied to portions of the two vertically-elongated treatment containers which correspond to the treatment container of the dryer is located between the two vertically-elongated treatment containers; and a target gas common supply passage for the target gas to be supplied to portions of the two vertically-elongated treatment containers which correspond to the treatment container of the adsorber is located between the two vertically-elongated treatment containers.

According to this configuration, since the two vertically-elongated treatment containers are included, the throughput of the adsorber and the dryer can be increased. In addition, since the drying gas common supply passage and the drying gas common supply passage are located between the two vertically-elongated treatment containers, the configuration can be simplified.

The carbon dioxide separation system according to a ninth aspect of the present disclosure is the carbon dioxide separation system according to the sixth or seventh aspect, wherein the carbon dioxide separation system includes the vertically-elongated treatment container that is a plurality of vertically-elongated treatment containers located so as to be lined up in a horizontal direction orthogonal to a thickness direction of the vertically-elongated treatment container, the carbon dioxide separation system further including: a drying gas common supply passage for the drying gas to be supplied to portions of the vertically-elongated treatment containers which correspond to the treatment container of the dryer; a target gas common supply passage for the target gas to be supplied to portions of the vertically-elongated treatment containers which correspond to the treatment container of the adsorber; a drying gas common discharge passage for the drying gas discharged from portions of the vertically-elongated treatment containers which correspond to the treatment container of the dryer; and a target gas common discharge passage for the target gas discharged from portions of the vertically-elongated treatment containers which correspond to the treatment container of the adsorber.

According to this configuration, since the vertically-elongated treatment containers are included, the throughput of the adsorber and the dryer can be increased. In addition, since the target gas common supply passage, the target gas common discharge passage, the drying gas common supply passage, and the drying gas common discharge passage common to the vertically-elongated treatment containers are included, the configuration can be simplified.

The carbon dioxide separation system according to a tenth aspect of the present disclosure is the carbon dioxide separation system according to the sixth or seventh aspect, including vertically-elongated treatment container pairs located so as to be lined up in a horizontal direction orthogonal to a thickness direction of the vertically-elongated treatment container, wherein: each of the vertically-elongated treatment container pairs includes the vertically-elongated treatment container that is a group of two vertically-elongated treatment containers lined up so as to be spaced apart from each other in the thickness direction of vertically-elongated treatment container; a drying gas common supply passage for the drying gas to be supplied to portions of the vertically-elongated treatment containers which correspond to the treatment container of the dryer is located between the two vertically-elongated treatment containers of each vertically-elongated treatment container pair; a target gas common supply passage for the target gas to be supplied to portions of the vertically-elongated treatment containers which correspond to the treatment container of the adsorber is located between the two vertically-elongated treatment containers of each vertically-elongated treatment container pair; a drying gas common discharge passage for the drying gas discharged from portions of the vertically-elongated treatment containers which correspond to the treatment container of the dryer is located between the two vertically-elongated treatment containers of each vertically-elongated treatment container pair; and a target gas common discharge passage for the target gas discharged from portions of the vertically-elongated treatment containers which correspond to the treatment container of the adsorber is located between the two vertically-elongated treatment containers of each vertically-elongated treatment container pair.

According to this configuration, since the vertically-elongated treatment container pairs each including the two vertically-elongated treatment containers lined up so as to be spaced apart from each other in the thickness direction are included, the throughput of the adsorber and the dryer can be increased. In addition, since the vertically-elongated treatment container pairs are located so as to be lined up in the horizontal direction orthogonal to the thickness direction of the vertically-elongated treatment container, and the target gas common supply passage, the target gas common discharge passage, the drying gas common supply passage, and the drying gas common discharge passage common to the vertically-elongated treatment containers of the vertically-elongated treatment container pairs are located between the two vertically-elongated treatment containers of each vertically-elongated treatment container pair, the configuration can be simplified.

The carbon dioxide separation system according to an eleventh aspect of the present disclosure is the carbon dioxide separation system according to any one of the sixth to tenth aspects, wherein the regenerator is located above the vertically-elongated treatment container, the carbon dioxide separation system further including an adsorbent transporter that transports the adsorbent, discharged from a discharge port of a lower end of the vertically-elongated treatment container, to the regenerator.

According to this configuration, although condensed water adheres to the adsorbent supplied from the regenerator to the vertically-elongated treatment container, the adsorbent is dried by the drying gas in the vertically-elongated treatment container. Therefore, the adsorbent discharged from the discharge port of the lower end of the vertically-elongated treatment container is dry. Thus, the handling of the adsorbent is easy, and the adsorbent can be satisfactorily transported by the adsorbent transporter.

The carbon dioxide separation system according to a twelfth aspect of the present disclosure is the carbon dioxide separation system according to the eleventh aspect, wherein: the regenerator includes regeneration treatment containers that are supplied with steam, temporarily store the adsorbent having adsorbed the carbon dioxide, and supply the adsorbent to a supply port of an upper end of the vertically-elongated treatment container; and the regeneration treatment containers sequentially supply the adsorbent to the vertically-elongated treatment container.

According to this configuration, the regeneration treatment containers are included for one vertically-elongated treatment container, and the adsorbent is sequentially supplied from the regeneration treatment containers to the vertically-elongated treatment container. Therefore, continuously performing the treatments in the dryer and the adsorber is facilitated while continuously discharging the adsorbent from the lower end of the vertically-elongated treatment container.

A carbon dioxide separation system according to a thirteenth aspect of the present disclosure includes: an adsorber that is supplied with a target gas containing carbon dioxide and causes particulate adsorbent to adsorb the carbon dioxide in the target gas by bringing the target gas into contact with the adsorbent; and a regenerator-dryer that causes the adsorbent, which has adsorbed the carbon dioxide, to release the carbon dioxide by bringing steam into contact with the adsorbent and then dries the adsorbent by vacuum drying, wherein: the adsorber includes a specific structural body; the specific structural body includes a treatment container in which the adsorbent moves downward by its own weight; the treatment container includes a main portion having an elongated horizontal cross section and extending in a vertical direction; and the main portion includes a gas flow region in predetermined opposing regions of both side surfaces of the treatment container, the side surfaces being opposed to each other in a thickness direction of the treatment container, the gas flow region being a region that does not allow the adsorbent to pass therethrough, supplies the gas, supplied to the specific structural body, to an inside of the treatment container, and discharges the gas, having passed through the inside of the treatment container in the thickness direction of the treatment container, from the inside of the treatment container to an outside.

According to this configuration, the adsorber includes the specific structural body, and the specific structural body includes the treatment container in which the adsorbent moves downward by its own weight. The treatment container includes the main portion having an elongated horizontal cross section and extending in the vertical direction. Predetermined opposing regions of both side surfaces, opposed to each other in the thickness direction of the treatment container, of the main portion are the gas flow regions that do not allow the adsorbent to pass therethrough and allow the gas to pass therethrough. Then, the target gas supplied to the specific structural body constituting the adsorber passes through the inside of the treatment container in the thickness direction of the treatment container via the opposing gas flow regions of the side surfaces of the treatment container. Thus, the travel distance of the target gas, supplied to the specific structural body, in the treatment container can be reduced, and the pressure loss of the target gas passing through the treatment container in which the adsorbent is present can be reduced. Moreover, the flow rate of the target gas can be increased by increasing the areas of the gas flow regions of the side surfaces of the treatment container. Since the pressure loss of the target gas is reduced, the energy cost required to supply the target gas can be reduced. For example, the electric power consumption of a fan and the like used to supply the target gas can be reduced.

A carbon dioxide separation system according to a fourteenth aspect of the present disclosure includes: an adsorber that is supplied with a target gas containing carbon dioxide and causes particulate adsorbent to adsorb the carbon dioxide in the target gas by bringing the target gas into contact with the adsorbent; a regenerator that causes the adsorbent, which has adsorbed the carbon dioxide, to release the carbon dioxide by bringing steam into contact with the adsorbent; and a dryer that dries the adsorbent, which has contacted the steam, by vacuum drying, wherein: the adsorber includes a specific structural body; the specific structural body includes a treatment container in which the adsorbent moves downward by its own weight; the treatment container includes a main portion having an elongated horizontal cross section and extending in a vertical direction; and the main portion includes a gas flow region in predetermined opposing regions of both side surfaces of the treatment container, the side surfaces being opposed to each other in a thickness direction of the treatment container, the gas flow region being a region that does not allow the adsorbent to pass therethrough, supplies the gas, supplied to the specific structural body, to an inside of the treatment container, and discharges the gas, having passed through the inside of the treatment container in the thickness direction of the treatment container, from the inside of the treatment container to an outside. The carbon dioxide separation system according to the fourteenth aspect can obtain effects similar to those of the carbon dioxide separation system according to the thirteenth aspect.

The carbon dioxide separation system according to a fifteenth aspect of the present disclosure is the carbon dioxide separation system according to the thirteenth or fourteenth aspect, wherein: the specific structural body includes treatment container pairs located so as to be lined up in a horizontal direction orthogonal to the thickness direction of the treatment container; each of the treatment container pairs includes the treatment container that is a group of two treatment containers lined up so as to be spaced apart from each other in the thickness direction of the treatment container; a gas common supply passage for the target gas to be supplied to the treatment containers of the treatment container pairs is located between the two treatment containers of each treatment container pair; and a gas common discharge passage for the target gas discharged from the treatment containers of the treatment container pairs is located between the two treatment containers of each treatment container pair.

According to this configuration, since the specific structural body constituting the adsorber includes the treatment container pairs, the throughput of the adsorber can be increased. Moreover, since the gas common supply passage and the gas common discharge passage are arranged, the configuration can be simplified.

The carbon dioxide separation system according to a sixteenth aspect of the present disclosure is the carbon dioxide separation system according to any one of the first to fifteenth aspects, wherein: the treatment container of the specific structural body includes the gas flow region that is a plurality of gas flow regions spaced apart from each other in the vertical direction on each of the side surfaces of the main portion; the gas supplied to the specific structural body passes through the inside of the treatment container multiple times; and each time the gas passes through the inside of the treatment container, the gas passes through the inside of the treatment container in the thickness direction of the treatment container through a different one of the gas flow regions.

According to this configuration, the performance of the specific structural body can be improved. To be specific, when the adsorber includes the specific structural body, the adsorption performance of the adsorbent that adsorbs carbon dioxide in the target gas can be improved. When the dryer includes the specific structural body, the drying performance of the drying gas that dries the adsorbent can be improved.

The carbon dioxide separation system according to a seventeenth aspect of the present disclosure is the carbon dioxide separation system according to the sixteenth aspect, wherein a total area of a horizontal cross section of an adsorbent passage in a portion of the treatment container of the specific structural body which is located between the gas flow regions located on each of the side surfaces of the main portion and adjacent to each other in the vertical direction is smaller than a total area of a horizontal cross section of an adsorbent passage in a portion of the treatment container of the specific structural body which corresponds to the gas flow regions.

According to this configuration, the gas and the gas passing through the adjacent gas regions in opposite directions can be prevented from interfering with each other in the treatment container.

The carbon dioxide separation system according to an eighteenth aspect of the present disclosure is the carbon dioxide separation system according to the sixteenth aspect, wherein rod-shaped objects are located in a portion inside the treatment container of the specific structural body with gaps that allow the adsorbent to pass therethrough, the portion being a portion between the gas flow regions located on each of the side surfaces of the main portion and adjacent to each other in the vertical direction.

According to this configuration, the gas and the gas passing through the adjacent gas regions in opposite directions can be prevented from interfering with each other in the treatment container. Therefore, the distance between the adjacent gas flow regions can be reduced, and the height of the treatment container can be reduced.

The carbon dioxide separation system according to a nineteenth aspect of the present disclosure is the carbon dioxide separation system according to any one of the sixteenth to eighteenth aspects, wherein when n is an integer of 1 or more, the gas flow region through which the gas supplied to the specific structural body passes when passing through the treatment container for a (n+1)-th time is located above the gas flow region through which the gas passes when passing through the treatment container for an n-th time.

According to this configuration, the performance of the specific structural body can be further improved.

The carbon dioxide separation system according to a twentieth aspect of the present disclosure is the carbon dioxide separation system according to the sixth aspect, wherein a total area of a horizontal cross section of an adsorbent passage in the coupling portion is smaller than a total area of a horizontal cross section of an adsorbent passage in a portion corresponding to the treatment container of the dryer and also smaller than a total area of a horizontal cross section of an adsorbent passages in a portion corresponding to the treatment container of the adsorber.

According to this configuration, the target gas can be prevented from flowing into the treatment container of the dryer, and the drying gas can be prevented from flowing into the treatment container of the adsorber. Thus, the drying treatment that dries the adsorbent by the drying gas and the adsorption treatment that causes the adsorbent to adsorb carbon dioxide contained in the target gas can be satisfactorily performed.

The carbon dioxide separation system according to a twenty-first aspect of the present disclosure is the carbon dioxide separation system according to the sixth aspect, wherein rod-shaped objects are located inside the coupling portion with gaps that allow the adsorbent to pass therethrough.

According to this configuration, the target gas can be prevented from flowing into the treatment container of the dryer, and the drying gas can be prevented from flowing into the treatment container of the adsorber. Thus, the drying treatment that dries the adsorbent by the drying gas and the adsorption treatment that causes the adsorbent to adsorb carbon dioxide contained in the target gas can be satisfactorily performed. In addition, the length of the coupling portion in the vertical direction can be reduced, and the height of the vertically-elongated treatment container can be reduced.

### Reference Signs List

2, 12 adsorber
3, 13 regenerator
4, 14 dryer
5, 15 adsorbent transporter
13a regeneration treatment container
60A, 60B, 60C, 60D specific structural body
61A, 61B treatment container
61AM, 61BM main portion
61AP, 61BP treatment container pair
64, 65, 64a, 64b, 65a, 65b gas flow region
74, 75, 76, 77 gas flow region
71 vertically-elongated treatment container
71A treatment container of dryer
71B treatment container of adsorber
71C coupling portion
71AM, 71BM main portion
71P vertically-elongated treatment container pair
80 rod-shaped object
91 target gas common supply passage
92 target gas common discharge passage
93 drying gas common supply passage
94 drying gas common discharge passage
95, 97 gas common supply passage
96, 98 gas common discharge passage
130 regenerator-dryer

## Claims

1. A carbon dioxide separation system comprising:
an adsorber that is supplied with a target gas containing carbon dioxide and causes particulate adsorbent to adsorb the carbon dioxide in the target gas by bringing the target gas into contact with the adsorbent;
a regenerator that causes the adsorbent, which has adsorbed the carbon dioxide, to release the carbon dioxide by bringing steam into contact with the adsorbent; and
a dryer that is supplied with a drying gas and dries the adsorbent, which has contacted the steam, by bringing the drying gas into contact with the adsorbent, wherein:
at least one of the adsorber or the dryer includes a specific structural body;
the specific structural body includes a treatment container in which the adsorbent moves downward by its own weight;
the treatment container includes a main portion having an elongated horizontal cross section and extending in a vertical direction; and
the main portion includes a gas flow region in predetermined opposing regions of both side surfaces of the treatment container, the side surfaces being opposed to each other in a thickness direction of the treatment container, the gas flow region being a region that does not allow the adsorbent to pass therethrough, supplies the gas, supplied to the specific structural body, to an inside of the treatment container, and discharges the gas, having passed through the inside of the treatment container in the thickness direction of the treatment container, from the inside of the treatment container to an outside.

2. The carbon dioxide separation system according to claim 1, wherein:
the specific structural body includes the treatment container that is a group of two treatment containers lined up so as to be spaced apart from each other in the thickness direction of the treatment container; and
a gas common supply passage for the gas to be supplied to the two treatment containers is located between the two treatment containers.

3. The carbon dioxide separation system according to claim 1, wherein the specific structural body includes the treatment container that is a plurality of treatment containers located so as to be lined up in a horizontal direction orthogonal to the thickness direction of the treatment container,
the carbon dioxide separation system further comprising:
a gas common supply passage for the gas to be supplied to the treatment containers; and
a gas common discharge passage for the gas discharged from the treatment containers.

4. The carbon dioxide separation system according to claim 1, wherein:
the specific structural body includes treatment container pairs located so as to be lined up in a horizontal direction orthogonal to the thickness direction of the treatment container;
each of the treatment container pairs includes the treatment container that is a group of two treatment containers lined up so as to be spaced apart from each other in the thickness direction of the treatment container;
a gas common supply passage for the gas to be supplied to the treatment containers of the treatment container pairs is located between the two treatment containers of each treatment container pair; and
a gas common discharge passage for the gas discharged from the treatment containers of the treatment container pairs is located between the two treatment containers of each treatment container pair.

5. The carbon dioxide separation system according to claim 4, wherein:
the regenerator is located below the adsorber;
the dryer is located below the regenerator; and
each of the adsorber and the dryer includes the specific structural body.

6. The carbon dioxide separation system according to claim 1, wherein:
the adsorber is located below the dryer;
each of the adsorber and the dryer includes the specific structural body; and
the carbon dioxide separation system includes a vertically-elongated treatment container configured by integrating the treatment container of the dryer and the treatment container of the adsorber through a coupling portion.

7. The carbon dioxide separation system according to claim 6, wherein the coupling portion prevents the drying gas supplied to the dryer from flowing into the adsorber and prevents the target gas supplied to the adsorber from flowing into the dryer.

8. The carbon dioxide separation system according to claim 6 or 7, wherein:
the carbon dioxide separation system includes the vertically-elongated treatment container that is a group of two vertically-elongated treatment containers lined up so as to be spaced apart from each other in a thickness direction of the vertically-elongated treatment container;
a drying gas common supply passage for the drying gas to be supplied to portions of the two vertically-elongated treatment containers which correspond to the treatment container of the dryer is located between the two vertically-elongated treatment containers; and
a target gas common supply passage for the target gas to be supplied to portions of the two vertically-elongated treatment containers which correspond to the treatment container of the adsorber is located between the two vertically-elongated treatment containers.

9. The carbon dioxide separation system according to claim 6 or 7, wherein the carbon dioxide separation system includes the vertically-elongated treatment container that is a plurality of vertically-elongated treatment containers located so as to be lined up in a horizontal direction orthogonal to a thickness direction of the vertically-elongated treatment container,
the carbon dioxide separation system further comprising:
a drying gas common supply passage for the drying gas to be supplied to portions of the vertically-elongated treatment containers which correspond to the treatment container of the dryer;
a target gas common supply passage for the target gas to be supplied to portions of the vertically-elongated treatment containers which correspond to the treatment container of the adsorber;
a drying gas common discharge passage for the drying gas discharged from portions of the vertically-elongated treatment containers which correspond to the treatment container of the dryer; and
a target gas common discharge passage for the target gas discharged from portions of the vertically-elongated treatment containers which correspond to the treatment container of the adsorber.

10. The carbon dioxide separation system according to claim 6 or 7, comprising vertically-elongated treatment container pairs located so as to be lined up in a horizontal direction orthogonal to a thickness direction of the vertically-elongated treatment container, wherein:
each of the vertically-elongated treatment container pairs includes the vertically-elongated treatment container that is a group of two vertically-elongated treatment containers lined up so as to be spaced apart from each other in the thickness direction of vertically-elongated treatment container;
a drying gas common supply passage for the drying gas to be supplied to portions of the vertically-elongated treatment containers which correspond to the treatment container of the dryer is located between the two vertically-elongated treatment containers of each vertically-elongated treatment container pair;
a target gas common supply passage for the target gas to be supplied to portions of the vertically-elongated treatment containers which correspond to the treatment container of the adsorber is located between the two vertically-elongated treatment containers of each vertically-elongated treatment container pair;
a drying gas common discharge passage for the drying gas discharged from portions of the vertically-elongated treatment containers which correspond to the treatment container of the dryer is located between the two vertically-elongated treatment containers of each vertically-elongated treatment container pair; and
a target gas common discharge passage for the target gas discharged from portions of the vertically-elongated treatment containers which correspond to the treatment container of the adsorber is located between the two vertically-elongated treatment containers of each vertically-elongated treatment container pair.

11. The carbon dioxide separation system according to claim 5 or 6, wherein the regenerator is located above the vertically-elongated treatment container,
the carbon dioxide separation system further comprising an adsorbent transporter that transports the adsorbent, discharged from a discharge port of a lower end of the vertically-elongated treatment container, to the regenerator.

12. The carbon dioxide separation system according to claim 11, wherein:
the regenerator includes regeneration treatment containers that are supplied with steam, temporarily store the adsorbent having adsorbed the carbon dioxide, and supply the adsorbent to a supply port of an upper end of the vertically-elongated treatment container; and
the regeneration treatment containers sequentially supply the adsorbent to the vertically-elongated treatment container.

13. The carbon dioxide separation system according to claim 1, wherein:
the regenerator and the dryer are configured as a regenerator-dryer that causes the adsorbent, which has adsorbed the carbon dioxide, to release the carbon dioxide by bringing the steam into contact with the adsorbent and then dries the adsorbent by vacuum drying; and
the adsorber includes the specific structural body.

14. The carbon dioxide separation system according to claim 1, wherein:
the dryer is configured as a dryer that dries the adsorbent, which has contacted the steam, by vacuum drying, instead of the dryer that supplies the drying gas to dry the adsorbent; and
the adsorber includes the specific structural body.

15. The carbon dioxide separation system according to claim 13 or 14, wherein:
the specific structural body includes treatment container pairs located so as to be lined up in a horizontal direction orthogonal to the thickness direction of the treatment container;
each of the treatment container pairs includes the treatment container that is a group of two treatment containers lined up so as to be spaced apart from each other in the thickness direction of the treatment container;
a gas common supply passage for the target gas to be supplied to the treatment containers of the treatment container pairs is located between the two treatment containers of each treatment container pair; and
a gas common discharge passage for the target gas discharged from the treatment containers of the treatment container pairs is located between the two treatment containers of each treatment container pair.

16. The carbon dioxide separation system according to any one of claims 1, 5, 6, 13, and 14, wherein:
the treatment container of the specific structural body includes the gas flow region that is a plurality of gas flow regions spaced apart from each other in the vertical direction on each of the side surfaces of the main portion;
the gas supplied to the specific structural body passes through the inside of the treatment container multiple times; and
each time the gas passes through the inside of the treatment container, the gas passes through the inside of the treatment container in the thickness direction of the treatment container through a different one of the gas flow regions.

17. The carbon dioxide separation system according to claim 16, wherein a total area of a horizontal cross section of an adsorbent passage in a portion of the treatment container of the specific structural body which is located between the gas flow regions located on each of the side surfaces of the main portion and adjacent to each other in the vertical direction is smaller than a total area of a horizontal cross section of an adsorbent passage in a portion of the treatment container of the specific structural body which corresponds to the gas flow regions.

18. The carbon dioxide separation system according to claim 16, wherein rod-shaped objects are located in a portion inside the treatment container of the specific structural body with gaps that allow the adsorbent to pass therethrough, the portion being a portion between the gas flow regions located on each of the side surfaces of the main portion and adjacent to each other in the vertical direction.

19. The carbon dioxide separation system according to claim 16, wherein when n is an integer of 1 or more, the gas flow region through which the gas supplied to the specific structural body passes when passing through the treatment container for a (n+1)-th time is located above the gas flow region through which the gas passes when passing through the treatment container for an n-th time.

20. The carbon dioxide separation system according to claim 6, wherein a total area of a horizontal cross section of an adsorbent passage in the coupling portion is smaller than a total area of a horizontal cross section of an adsorbent passage in a portion corresponding to the treatment container of the dryer and also smaller than a total area of a horizontal cross section of an adsorbent passages in a portion corresponding to the treatment container of the adsorber.

21. The carbon dioxide separation system according to claim 6, wherein rod-shaped objects are located inside the coupling portion with gaps that allow the adsorbent to pass therethrough.
